(19) Europäisches Patentamt
European Patent Office
Office européen des brevets

(11) **EP 4 137 897 B1**

(12) **EUROPEAN PATENT SPECIFICATION**

(45) Date of publication and mention
of the grant of the patent:
**04.03.2026 Bulletin 2026/10**

(21) Application number: **20935690.6**

(22) Date of filing: **09.05.2020**

(51) International Patent Classification (IPC):
**G05B 19/04** (2006.01)   **B60W 50/00** (2006.01)
**B60W 60/00** (2020.01)   **B60W 50/08** (2020.01)
**B60W 50/14** (2020.01)

(52) Cooperative Patent Classification (CPC):
**B60W 60/0053; B60W 50/0098; B60W 50/082;**
**B60W 50/14; B60W 60/00; B60W 60/0059;**
B60W 2050/0029; B60W 2050/0088;
B60W 2050/146; B60W 2540/043; B60W 2540/21;
B60W 2540/22; B60W 2540/223; B60W 2556/10;
B60W 2556/45;                              (Cont.)

(86) International application number:
**PCT/CN2020/089491**

(87) International publication number:
**WO 2021/226767 (18.11.2021 Gazette 2021/46)**

(54) **METHOD AND DEVICE FOR SELF-ADAPTIVELY OPTIMIZING AUTOMATIC DRIVING SYSTEM**

VERFAHREN UND VORRICHTUNG ZUR SELBSTADAPTIVEN OPTIMIERUNG EINES
AUTOMATISCHEN FAHRSYSTEMS

PROCÉDÉ ET DISPOSITIF D'OPTIMISATION AUTO-ADAPTATIVE D'UN SYSTÈME DE CONDUITE
AUTOMATIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**22.02.2023 Bulletin 2023/08**

(73) Proprietor: **Shenzhen Yinwang Intelligent**
**Technologies Co., Ltd.**
**Shenzhen, Guangdong 518129 (CN)**

(72) Inventors:
• **SUN, Xiaoyu**
**Shenzhen, Guangdong 518129 (CN)**
• **GUO, Hongqiang**
**Shenzhen, Guangdong 518129 (CN)**

• **WANG, Qin**
**Shenzhen, Guangdong 518129 (CN)**
• **ZHANG, Deming**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
EP-A2- 3 533 681        CN-A- 104 097 634
CN-A- 104 859 652       CN-A- 105 365 851
CN-A- 107 315 359       CN-A- 107 662 611
CN-A- 108 803 623       CN-A- 111 038 521
DE-A1- 102016 224 291   US-A1- 2014 297 115
US-A1- 2016 347 328     US-A1- 2018 365 740
US-A1- 2019 047 584     US-A1- 2019 135 274

(52) Cooperative Patent Classification (CPC): (Cont.)
B60W 2754/30

## Description

### TECHNICAL FIELD

This invention relates to the field of autonomous driving technologies, and in particular, to a method and an apparatus for adaptively optimizing an autonomous driving system.

### BACKGROUND

With development of autonomous driving technologies, the autonomous driving technologies provide many conveniences for people to drive vehicles. Autonomous driving means that one or more autonomous driving modes can be configured on a vehicle. A driver selects, from the one or more autonomous driving modes based on the driver's requirement, an autonomous driving mode suitable for a current driving scenario, and triggers, based on the autonomous driving mode, the vehicle to drive.

However, an existing configuration quantity of autonomous driving modes is limited. Driving requirements of all drivers in all different driving scenarios are not considered when the autonomous driving modes are configured. In some driving scenarios, autonomous driving modes configured on a vehicle cannot meet driving requirements of a driver. In this case, the driver needs to switch an autonomous driving mode to a manual driving mode.

For example, in a driving scenario, when a driving behavior of a vehicle controlled by an autonomous driving system conflicts with the driver's driving intent (for example, a driving plan expected by the driver), the driver usually directly takes over the vehicle and manually drives the vehicle. However, an autonomous driving plan included in the autonomous driving system of the vehicle is not adjusted based on the current conflict. As a result, in a same driving scenario later, a driving behavior of the vehicle controlled by the autonomous driving system still conflicts with the driver's driving intent, and the driver's personalized requirement cannot be met.

US 2016/347328A describes a driving assistance device and a driving assistance method for vehicles capable of making switching between automatic driving and manual driving. The device comprises: an information receiver that acquires respective position information of the vehicle and feature amounts of driving operations by the driver, as triggered by occurrence of switching in driving of the vehicle from the automatic driving mode to the manual driving mode; a determination processor that determines from the feature amounts of the driving operations by the driver acquired by the information receiver, a driving operation to be corrected in the automatic driving mode and a correction amount thereof; a storage that stores the driving operation to be corrected and the correction amount thereof that are determined by the determination processor, in a manner associated with their corresponding position information; a correction processor that corrects a driving operation in the automatic driving mode, using the driving operation to be corrected and the correction amount thereof that are read out from the storage; and a vehicle controller that controls the vehicle in the automatic driving mode in which the driving operation corrected by the correction processor is included.

DE 102016224291A describes a method for computer-aided adaptation of a predefined semi-automated driving system (TF) of a motor vehicle (1). It discloses that when a boundary condition occurs, the predefined semi-autonomous driving system automatically transmits driving tasks to the driver and trains the predefined semi-autonomous driving system based on the response of the driver after taking over.

US 2019/135274A describes a systems and methods of controlling a robotic driving vehicle based on the non-deliberate reactions of one or more occupants. It discloses collecting passenger data in an automatic driving process, and determining a vehicle operation command based on the passenger data, where the operation command affects an operation of the automatic driving.

### SUMMARY

This invention provides a method and an apparatus for adaptively optimizing an autonomous driving system, to resolve a problem, in a current technology, that a driving behavior of a vehicle under control of an autonomous driving system conflicts with a driving intent of a driver.

To achieve the foregoing objective, the following technical solutions are used in this invention.

According to a first aspect, a method for adaptively optimizing an autonomous driving system is provided as defined in independent claim 1. The method may be applied to an autonomous driving apparatus of a vehicle. For example, the autonomous driving apparatus may be a vehicle-mounted apparatus, or the autonomous driving apparatus may be applied to a chip or a system-on-a-chip of a vehicle-mounted apparatus. The method may include the following: the autonomous driving apparatus obtains a driving intent of a driver of an autonomous driving vehicle controlled by the autonomous driving system; and the autonomous driving apparatus detects, based on the driver's driving intent, that a conflict exists between a driving behavior of the target vehicle controlled by the autonomous driving system and the driver's driving intent, and updates the autonomous driving system, so that a driving behavior of the target vehicle controlled by an updated autonomous driving system matches the driver's driving intent.

Based on the method for adaptively optimizing an autonomous driving system provided in the first aspect, when it is detected that the driving intent of the driver of the autonomous driving vehicle controlled by the autonomous driving system conflicts with the driving behavior of the vehicle controlled by the autonomous driving system, the autonomous driving system is updated, so that a driving behavior of the vehicle controlled by an updated autonomous driving system matches the driver's driving intent. Based on this, a subsequent driving behavior controlled by the updated autonomous driving system can meet the driver's driving requirement. In this way, a problem that a driving behavior of a vehicle controlled by an autonomous driving system conflicts with a driving intent of a driver is resolved.

In a possible implementation, the driving intent is represented by a feature parameter corresponding to the driver's behavior, and the driver's behavior includes one or more of an operation behavior and an emotional behavior of the driver, wherein the emotional behavior is an emotion behavior obtained when the driver focuses on the driving behavior of the target vehicle or when the driver is not performing a second task, wherein a visual behavior and a physical posture behavior of the driver are used to reflect the driver focusing on the driving behavior of the target vehicle, the driver's physical posture behavior is used to determine that the driver is not performing the second task.

Based on this possible implementation, the driver's driving intent may be determined, comprehensively and accurately, from a plurality of angles based on a plurality of feature behaviors of the driver.

In a possible implementation, that the conflict exists between the driving behavior of the target vehicle controlled by the autonomous driving system and the driver's driving intent includes: the feature parameter corresponding to the driver's behavior exceeds a preset range; and/or a time period for which the feature parameter corresponding to the driver's behavior exceeds the preset range is greater than or equal to a first preset value; and/or a quantity of times that the feature parameter corresponding to the driver's behavior exceeds the preset range is greater than or equal to a second preset value.

Based on this possible implementation, the driver's behavior can accurately reflect the driver's driving intent. Based on this, when the feature parameter corresponding to the driver's behavior exceeds the preset range, and/or a time period for which and/or a quantity of times that the feature parameter corresponding to the driver's behavior exceeds the preset range are/is greater than or equal to a preset value, it can be accurately determined that the driver's driving intent conflicts with the driving behavior of the vehicle controlled by the autonomous driving system.

According to the first aspect, the autonomous driving apparatus obtains, based on the driver's driving intent and the driving behavior of the target vehicle controlled by the autonomous driving system, a first feature parameter that is used to represent the driver's driving intent and driving data corresponding to the driving behavior of the target vehicle controlled by the autonomous driving system; the autonomous driving apparatus inputs the first feature parameter into a preset neural network model that is used to determine a driving behavior that matches the driver's driving intent, to obtain a first driving behavior; and the autonomous driving apparatus updates the autonomous driving system based on the first driving behavior.

Based on this implementation, the preset neural network model may be preconfigured in the autonomous driving apparatus of the vehicle. Therefore, the autonomous driving apparatus may input, into the preset neural network model, the feature parameter that represents the driver's driving intent and the driving data corresponding to the driving behavior of the vehicle controlled by the autonomous driving system, to obtain a first behavior feature. Then, the autonomous driving apparatus updates the autonomous driving system based on the first behavior feature. This is simple and convenient.

In a possible implementation, the autonomous driving apparatus presents one or more questions to the driver; the autonomous driving apparatus receives, from the driver, answers to the one or more questions, where the answers to the one or more questions is used to indicate whether to update the autonomous driving system; and when the answers to the one or more questions is used to indicate to update the autonomous driving system, the autonomous driving apparatus updates the autonomous driving system based on the first driving behavior.

Based on this possible implementation, after the driver's driving intent is determined, the driver's driving intent may be further confirmed based on the one or more questions. The driver's answer to the one or more questions can reflect the driver's real driving intent. In this way, the driver's driving intent can be determined more accurately. Further, whether to update the autonomous driving system may be determined based on the driver's answers. When the answer to the one or more questions are used to indicate to update the autonomous driving system, the autonomous driving system is updated based on a driving behavior that matches the driving intent, so that a driving behavior of the vehicle controlled by an updated autonomous driving system meets the driver's driving intent.

In a possible implementation, when the first driving behavior complies with a safe driving behavior of the target vehicle, the autonomous driving apparatus uses the first driving behavior as a driving behavior of the target vehicle controlled by the updated autonomous driving system; or when the first driving behavior does not comply with a safe driving behavior of the target vehicle, the autonomous driving apparatus uses the safe driving behavior as a driving behavior of the target vehicle controlled by the updated autonomous driving system.

Based on this possible implementation, to ensure that the vehicle safely travels under control of the autonomous driving system, when the driving behavior of the vehicle controlled by the updated autonomous driving system matches the driver's driving intent, and the driving behavior complies with a safe driving behavior of the vehicle, the driving behavior may be used as a behavior controlled by the updated autonomous driving system. Alternatively, when the driving behavior does not comply with a safe driving behavior of the vehicle, the safe driving behavior may be used as a behavior controlled by the updated autonomous driving system. In this way, the vehicle can travel safely under control of the autonomous driving system.

According to a second aspect, an apparatus for adaptively optimizing an autonomous driving system is provided as defined in independent claim 6. The apparatus is applied to an autonomous driving apparatus or a chip or a system-on-a-chip in an autonomous driving apparatus, or may be a function module that is in an autonomous driving apparatus and that is configured to implement the method according to the first aspect or any possible design of the first aspect. The apparatus may implement functions performed by the autonomous driving apparatus in the foregoing aspects or possible designs. The functions may be implemented by hardware executing corresponding software. The hardware or software includes one or more modules corresponding to the foregoing functions. The apparatus for adaptively optimizing an autonomous driving system includes a communication unit and a processing unit.

The communication unit is configured to obtain a driving intent of a driver of a target vehicle, where the target vehicle is an autonomous driving vehicle controlled by the autonomous driving system.

The processing unit is configured to detect, based on the driver's driving intent, that a conflict exists between a driving behavior of the target vehicle under the autonomous driving control and the driver's driving intent.

The processing unit is further configured to update the autonomous driving system, so that a driving behavior of the target vehicle controlled by an updated autonomous driving system matches the driver's driving intent.

For a specific implementation of the apparatus for adaptively optimizing an autonomous driving system, refer to behavior functions of the autonomous driving apparatus in the method for adaptively optimizing an autonomous driving system according to the first aspect or any possible design of the first aspect. Details are not described herein again. Therefore, the provided apparatus for adaptively optimizing an automatic driving system can achieve a same beneficial effect as that of the first aspect or any possible design of the first aspect.

According to a non-claimed third aspect, an autonomous driving apparatus is provided. The autonomous driving apparatus may be a vehicle-mounted apparatus, or a chip or a system-on-a-chip in a vehicle-mounted apparatus. The autonomous driving apparatus may implement functions performed by the autonomous driving apparatus in the foregoing aspects or possible designs. The functions may be implemented by hardware. For example, in a possible design, the autonomous driving apparatus may include a processor and a communication interface. The processor is configured to run a computer program or instructions, to implement the method for adaptively optimizing an autonomous driving system according to the first aspect or any possible implementation of the first aspect.

In another possible design, the autonomous driving apparatus may further include a memory, and the memory is configured to store computer executable instructions and data that are necessary for the autonomous driving apparatus. When the autonomous driving apparatus runs, the processor executes the computer executable instructions stored in the memory, so that the autonomous driving apparatus is enabled to perform the method for adaptively optimizing an autonomous driving system according to the first aspect or any possible design of the first aspect.

According to a fourth aspect, a computer-readable storage medium is provided. The computer-readable storage medium may be a readable non-volatile storage medium. The computer-readable storage medium stores computer instructions or a program. When the computer instructions or the program are/is run on a computer, the computer is enabled to perform the method for adaptively optimizing an autonomous driving system according to the first aspect or any possible design of the foregoing aspects.

According to a fifth aspect, a computer program product including instructions is provided. When the computer program product runs on a computer, the computer is enabled to perform the method for adaptively optimizing an autonomous driving system according to the first aspect or any possible design of the foregoing aspects.

According to a non-claimed sixth aspect, an autonomous driving apparatus is provided. The autonomous driving apparatus may be an autonomous driving apparatus, or a chip or a system-on-a-chip in an autonomous driving apparatus. The autonomous driving apparatus includes one or more processors and one or more memories. The one or more memories are coupled to the one or more processors, the one or more memories are configured to store computer program code, and the computer program code includes computer instructions. When the one or more processors execute the computer instructions, the autonomous driving apparatus is enabled to perform the method for adaptively optimizing an autonomous driving system according to the first aspect or any possible design of the first aspect.

According to a non-claimed seventh aspect, a chip system is provided. The chip system includes a processor and a communication interface. The chip system may be configured to implement functions performed by the autonomous driving apparatus in the first aspect or any possible design of the first aspect. For example, the processor is configured to obtain an operation feature of a driver by using the communication interface.

For a technical effect brought by any design of the second aspect to the seventh aspect, refer to the technical effect brought by the first aspect or any possible design of the first aspect. Details are not described again.

According to an eighth aspect, a communication system is provided. The communication system includes an autonomous driving apparatus and a vehicle to everything (vehicle to everything, V2X) server. The autonomous driving apparatus is communicatively connected to the V2X server. The autonomous driving apparatus may be configured to implement functions performed by the autonomous driving apparatus in the first aspect or any possible design of the first aspect. The V2X server may be configured to provide a plurality of pieces of information for the autonomous driving apparatus. For example, the plurality of pieces of information may include feature information of a driver, a driving behavior of the vehicle controlled by the autonomous driving system, and the like.

## BRIEF DESCRIPTION OF DRAWINGS

FIG. 1 is a schematic diagram of a structure of a communication system according to an embodiment of this invention;
FIG. 2 is a schematic diagram of a structure of a vehicle according to an embodiment of this invention;
FIG. 3 is a schematic diagram of a structure of an autonomous driving apparatus according to an embodiment of this invention;
FIG. 4 is a schematic diagram of a structure of a V2X server according to an embodiment of this invention;
FIG. 5 is an example flowchart of a method for adaptively optimizing an autonomous driving system according to an embodiment of this invention;
FIG. 6a is an example diagram in which a driver performs an operation on an acceleration pedal of a vehicle according to an embodiment of this invention;
FIG. 6b is an example diagram in which a driver performs an operation on a deceleration pedal of a vehicle according to an embodiment of this invention;
FIG. 6c is an example diagram in which a driver performs an operation on a steering wheel of a vehicle according to an embodiment of this invention;
FIG. 7 is a schematic diagram of a structure of a vehicle according to an embodiment of this invention;
FIG. 8 is a schematic diagram of a display interface of a vehicle according to an embodiment of this invention;
FIG. 9 is an example flowchart of another method for adaptively optimizing an autonomous driving system according to an embodiment of this invention;
FIG. 10 is a schematic diagram of a structure of an autonomous driving apparatus 1000 according to an embodiment of this invention; and
FIG. 11 is a schematic diagram of a structure of a communication system according to an embodiment of this invention.

## DESCRIPTION OF EMBODIMENTS

Before embodiments of this invention are described, terms in embodiments of this invention are explained and described.

Traffic information may alternatively be referred to as a key element, a traffic feature, a passing feature, or the like. This is not limited. The traffic information may be used to indicate a traffic environment of a driving road in a driving process of a vehicle. Specifically, the traffic information may include one or more of vehicle information, obstacle information, pedestrian information, and traffic environment information that are about the driving road of the vehicle.

The vehicle information, the obstacle information, and the pedestrian information may indicate a location, a speed, and the like of another vehicle, a pedestrian, or an obstacle that is relative to an ego vehicle. Specifically, the vehicle information may include a quantity of vehicles, a vehicle speed, a distance from a vehicle to the ego vehicle, and a vehicle type. The obstacle information may include a height-limiting pole, a guard rail, and the like on a road. The pedestrian information may include a quantity of pedestrians, a pedestrian speed, and a distance from a pedestrian to the ego vehicle. The traffic environment information may include road information, a light condition, and a weather condition. For example, the road information may be information about a highway, a national road, a provincial road, an urban road, a rural road, or the like. The road information may further include information about a closed road sign, a traffic light, a lane line, a closed road, an unclosed road, and the like. This is not limited.

The traffic sign may indicate an upper limit of a road speed, a lower limit of the road speed, stopping driving ahead, and the like. The traffic light can indicate whether to stop, turn left or turn right. The lane line may indicate a driving direction of a vehicle, a turning radius, lane directions on both sides, whether lane change is allowed, and the like.

In this way, in a process in which a driver drives a vehicle to travel on a road, when facing different traffic information, the driver may control the vehicle to perform driving behaviors corresponding to the traffic information.

A driving behavior may alternatively be referred to as a driving subject task. The driving behavior means that in a process of traveling on a road, a vehicle needs to complete different driving actions in different traffic environments before reaching a destination. The different actions may be following a vehicle, keeping a lane, changing a lane to cut in, being cut in by another vehicle during driving, or the like. For example, in a case in which a vehicle is cut in by another vehicle during driving, a driving behavior of the ego vehicle is to reduce a vehicle speed when the ego vehicle is cut in.

A vehicle may perform one or more driving behaviors corresponding to one piece of traffic information. The one or more driving behaviors may be used to reflect a driving intent of a driver.

For example, when the traffic information includes information that a driving road is a curve, driving behaviors of the vehicle may include driving with deceleration, adjusting a driving direction based on a curve radius, and the like. The traffic information and the one or more vehicle driving behaviors corresponding to the traffic information may constitute a driving scenario.

A driving scenario may alternatively be referred to as a driving function domain. The driving scenario means clustering, based on a preset clustering algorithm, a plurality of pieces of traffic information that have a same or similar feature and vehicle driving behaviors corresponding to the traffic information, to obtain a plurality of categories, where each of the plurality of categories may include one type of traffic information and at least one driving behavior corresponding to the traffic information. One category corresponds to one driving scenario. In different driving scenarios, a vehicle-mounted device has different driving behaviors under control of an autonomous driving system.

The preset clustering algorithm may be a k-means clustering algorithm (k-means clustering algorithm, k-means). For the k-means clustering algorithm, refer to a current technology. Details are not described herein again.

For example, as shown in Table 1, driving scenarios may include driving in a direction of traffic along an urban rush-hour road section, driving in a direction of traffic along a closed road, driving slowly on a non-closed road, passing at an urban road intersection, passing at a non-urban road intersection, and the like. Traffic information and driving behaviors that are included in the foregoing driving scenarios may be shown in Table 1.

**Table 1**

| Traffic information | Driving behavior | Driving scenario |
|---|---|---|
| Urban road section | Keep a current vehicle speed, drive with deceleration, and drive with acceleration | Drive in a direction of traffic along an urban rush-hour road section |
| Closed road | Keep a current vehicle speed, drive with deceleration, and drive with acceleration | Drive in a direction of traffic along a closed road |
| Non-closed road | Drive with deceleration and pull over | Drive slowly on a non-closed road |
| Urban road | Drive with deceleration, stop driving, keep a lane, change a lane to cut in, and drive at a turn | Pass at an urban road intersection |
| Non-urban road intersection | Drive with deceleration, stop driving, keep a lane, change a lane to cut in, and drive at a turn | Pass at a non-urban road intersection |

In Table 1, the traffic information in each driving scenario may further include other information, for example, vehicle information and pedestrian information of a road. For a specific description, refer to the description of the foregoing traffic information. Details are not described again. Table 1 may further include another driving scenario. This is not limited.

A driver's driving intent refers to an operation performed by the driver on the vehicle or a driving behavior that the driver wants the vehicle to perform when the vehicle is driving. The driving behavior may include following a vehicle, changing a lane to the left, changing a lane to the right, overtaking a vehicle, or the like. For example, in a driving scenario, a driving behavior that a driver wants a vehicle to perform is to overtake another vehicle. When the vehicle performs the driving behavior of overtaking another vehicle, the driver's driving operation is to control an acceleration pedal, so that the vehicle performs a driving behavior of acceleration. The driving operation that the driver controls the acceleration pedal and the driving behavior that the vehicle performs acceleration may be referred to as natural driving data.

Natural driving data is a general term that refers to a driving behavior of a vehicle and an operation feature performed by a driver on the vehicle when the driver drives the vehicle.

Operation features may include controlling a steering wheel, controlling an acceleration pedal, controlling a deceleration pedal, and the like. This is not limited.

The autonomous driving mode means that a driver enters a destination into an autonomous driving system, and the autonomous driving system may determine a proper driving route based on a preset parameter. The driving route may include a plurality of pieces of traffic information. For example, the plurality of pieces of traffic information may include a plurality of curves, a plurality of road intersections, and the like.

The autonomous driving system may control, based on different driving scenarios on the driving route, a vehicle configured with the autonomous driving system to perform corresponding driving behaviors. For example, at a curve of the driving route, the autonomous driving system may adjust a driving behavior of the vehicle based on curvature of the road.

For example, the autonomous driving system may adjust a rotation direction, a rotation angle, and a vehicle speed that are of the vehicle, so that the vehicle travels smoothly and safely.

In a current technology, a quantity of autonomous driving modes configured for a vehicle is limited, and driving requirements of all drivers in all scenarios are not considered when the autonomous driving modes are configured for the vehicle. Therefore, the autonomous driving modes configured for the vehicle in some driving scenarios cannot meet driving requirements of a driver. Alternatively, in the autonomous driving technology, for a scenario that cannot be processed by the autonomous driving system, the autonomous driving system reminds the driver to take over a driving right of the vehicle and drive manually. In this case, the driver needs to switch an autonomous driving mode to a manual driving mode. For example, in a driving scenario, when a driving behavior executed by a vehicle controlled by an autonomous driving system conflicts with the driver's driving intent (for example, a driving plan expected by the driver), the driver usually directly takes over the vehicle and manually drives the vehicle. However, the driving behavior of the vehicle under control of the autonomous driving mode is not adjusted based on a current conflict. As a result, in a same driving scenario later, a driving behavior of the vehicle controlled by the autonomous driving system still conflicts with the driver's driving intent, and the driver's personalized requirement cannot be met.

To resolve the foregoing technical problem, embodiments of this invention provide a method for adaptively optimizing an autonomous driving system, and the method is applied to an autonomous driving apparatus of a vehicle. The method includes the following: the autonomous driving apparatus obtains a driving intent of a driver; the autonomous driving apparatus detects, based on the driver's driving intent, that a conflict exists between a driving behavior of the vehicle controlled by the autonomous driving system and the driver's driving intent; and the autonomous driving apparatus updates the autonomous driving system, so that a driving behavior of the vehicle controlled by an updated autonomous driving system matches the driver's driving intent.

Based on the technical solution, when it is detected that the driving intent of the driver of the autonomous driving vehicle controlled by the autonomous driving system conflicts with the driving behavior of the vehicle controlled by the autonomous driving system, the autonomous driving system is updated, so that a driving behavior of the vehicle controlled by an updated autonomous driving system matches the driver's driving intent. Based on this, a subsequent driving behavior controlled by the updated autonomous driving system can meet the driver's driving requirement. In this way, a problem that a driving behavior of a vehicle controlled by an autonomous driving system conflicts with a driving intent of a driver is resolved.

The following describes implementations of embodiments of this invention in detail with reference to the accompanying drawings.

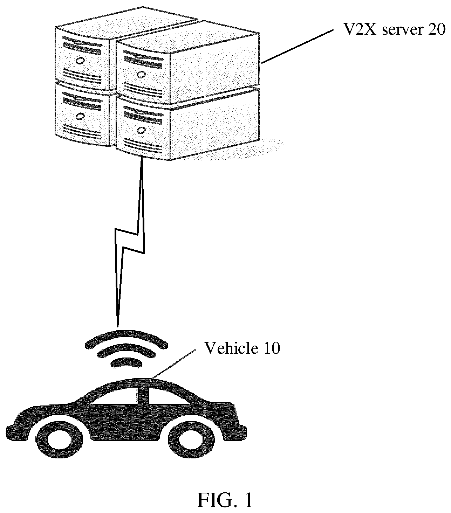

FIG. 1 shows an example diagram of a communication system according to an embodiment of this invention. As shown in FIG. 1, the communication system may include a vehicle 10 and a V2X server 20. The vehicle 10 may communicate with the V2X server 20 by using a V2X communication technology. The vehicle 20 may further communicate with the V2X server 20 through a radio link. For example, the vehicle 20 and the V2X server 20 communicate with each other via a 5th generation (5th generation, 5G) network, or may communicate in another manner. This is not limited.

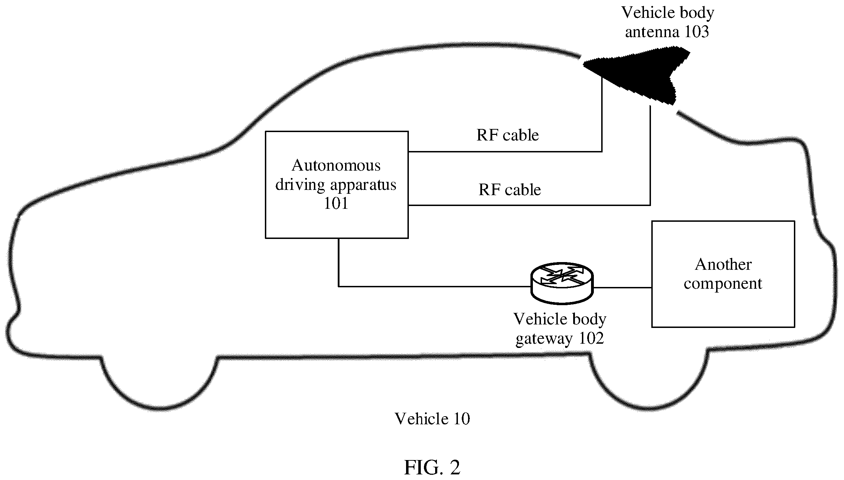

The vehicle 10 may be an intelligent network driving (intelligent network driving) vehicle, and is a typical vehicle-to-everything terminal. A person skilled in the art should understand that the vehicle 10 may specifically perform, by using an internal functional unit or apparatus of the vehicle 10, the method for adaptively optimizing an autonomous driving system in this embodiment of this invention. For example, the vehicle 10 may include an autonomous driving apparatus configured to perform the method for adaptively optimizing an autonomous driving system provided in this embodiment of this invention. The autonomous driving apparatus may be communicatively connected to another component of the vehicle 10 via a controller area network (controller area network, CAN) bus. A specific structure of the vehicle 10 is described in detail in an embodiment shown in FIG. 2.

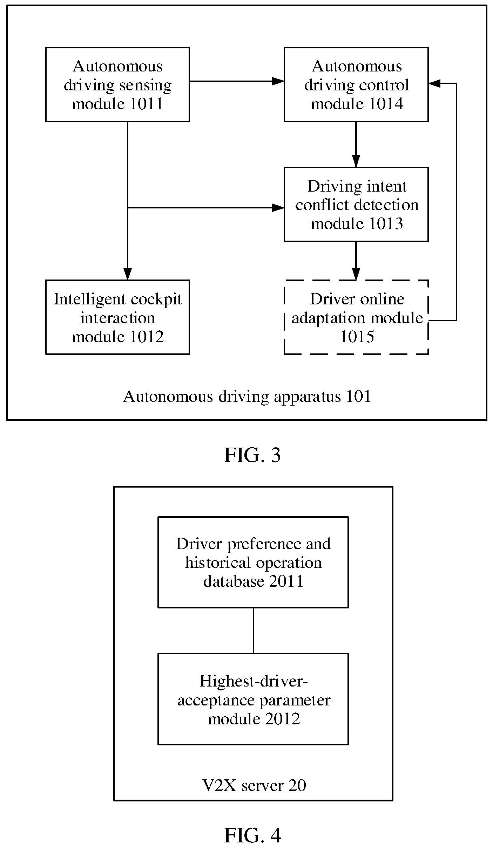

The V2X server 20 may provide the vehicle 10 with natural driving data of a plurality of driving behaviors of the vehicle controlled by an autonomous driving system and/or natural driving data of a plurality of drivers, and the like. The V2X server 20 may be further configured to: receive a driver's image information from the vehicle 10, and recognize the driver's image information to obtain the driver's physical posture behavior. For example, the physical posture behavior may include whether the driver is using a mobile phone, whether the driver is driving with fatigue, and the like. The V2X server 20 may further send information about the driver's physical posture behavior to the vehicle 10. The V2X server 20 may be a physical server, or may be a virtual server, for example, a cloud server. This is not limited. A specific structure of the V2X server 20 is described in detail in an embodiment shown in FIG. 4.

It should be noted that the communication system described in embodiments of this invention is intended to describe technical solutions in embodiments of this invention more clearly, and does not constitute a limitation on the technical solutions provided in embodiments of this invention. A person of ordinary skill in the art may learn that, with evolution of a communication system and emergence of another communication system, the technical solutions provided in embodiments of this invention are also applicable to a similar technical problem.

FIG. 2 is a schematic diagram of a structure of a vehicle 10 according to an embodiment of this invention. As shown in FIG. 2, the vehicle 10 may include an autonomous driving apparatus 101, a vehicle body gateway 102, a vehicle body antenna 103, and the like. The autonomous driving apparatus 101 may be communicatively connected to the vehicle body antenna 103 through a radio frequency (radio frequency, RF) cable.

It may be understood that the structure illustrated in FIG. 2 does not constitute a specific limitation on the vehicle 10. In some embodiments, the vehicle 10 may include more or fewer components than the components shown in FIG. 2; alternatively, the vehicle 10 may include combined components of some components shown in FIG. 2; alternatively, the vehicle 10 may include split components of the components shown in FIG. 2, or the like. For example, the vehicle 10 may further include a domain controller (domain controller, DC), a multi-domain controller (multi-domain controller, MDC), and the like. The components shown in FIG. 2 may be implemented by hardware, software, or a combination of software and hardware. For example, the autonomous driving apparatus 101 in the vehicle 10 may be a vehicle-to-everything chip or the like. A specific structure of the autonomous driving apparatus 101 is described in detail in an embodiment shown in FIG. 3.

The autonomous driving apparatus 101 may be referred to as an on board unit (on board unit, OBU), a vehicle-mounted terminal, or the like. For example, the autonomous driving apparatus 101 may be a telematics box (telematics BOX, T-Box). The autonomous driving apparatus 101 is mainly configured to perform the method for adaptively optimizing an autonomous driving system provided in this embodiment of this invention.

The vehicle body gateway 102 is mainly configured to receive and send vehicle information. The vehicle body gateway 102 may be connected to the autonomous driving apparatus 101 through a CAN bus. For example, the vehicle body gateway 102 may obtain, from the autonomous driving apparatus 101, an updated autonomous driving system and a driving behavior of the vehicle controlled by the autonomous driving system that are obtained after the autonomous driving apparatus 101 performs the method for adaptively optimizing an autonomous driving system according to this embodiment of this invention. Then, the vehicle body gateway 102 sends the obtained updated autonomous driving system and the driving behavior of the vehicle controlled by the autonomous driving system to another component of the vehicle 10.

The vehicle body antenna 103 may have a built-in communication antenna, and the communication antenna is responsible for receiving and sending a signal. For example, the communication antenna may send vehicle information of a vehicle to an autonomous driving apparatus of another vehicle, or may receive vehicle information sent by another autonomous driving apparatus.

FIG. 3 is a schematic diagram of a structure of an autonomous driving apparatus 101 according to an embodiment of this invention. As shown in FIG. 3, the autonomous driving apparatus 101 may include an autonomous driving sensing module 1011, an intelligent cockpit interaction module 1012, a driving intent conflict detection module 1013, and an autonomous driving control module 1014.

The autonomous driving sensing module 1011 may be configured to: recognize and classify traffic information and driving behaviors of the vehicle 10. The intelligent cockpit interaction module 1012 is mainly configured to obtain a driver's image information and voice information, and may further perform voice recognition on the driver's voice information. The driving intent conflict detection module 1013 may be configured to: determine the driver's driving intent, and detect whether the driver's driving intent conflicts with a driving behavior of the vehicle controlled by the autonomous driving system. The autonomous driving control module 1014 may be configured to control a driving behavior of the vehicle during autonomous driving.

For example, the intelligent cockpit interaction module 1012 may recognize the driver's voice information by using a long short-term memory-deep neural network (long-short term memory-deep neural network, LSTM-DNN) model. For example, the LSTM-DNN model is configured for the intelligent cockpit interaction module 1012. The autonomous driving apparatus may obtain, by using a voice collection apparatus, voice information of a person inside the vehicle, and input the voice information of the person inside the vehicle into the LSTM-DNN model of the intelligent cockpit interaction module 1012, so that the intelligent cockpit interaction module 1012 is enabled to recognize the voice information of the person inside the vehicle. For descriptions related to voice information recognition in the following, refer to this embodiment. Details are not described subsequently.

In a possible design, as shown in FIG. 3, the autonomous driving apparatus 101 may further include a driver online adaptation module 1015. The driver online adaptation module 1015 may be configured to: adjust, based on a driving intent of a driver of a vehicle in a driving scenario, a driving behavior of the vehicle controlled by an autonomous driving system in the driving scenario, and send information about an adjusted driving behavior of the vehicle controlled by the autonomous driving system and the driving scenario to the autonomous driving control module 1014.

After receiving, from the driver online adaptation module 1015, the information about the adjusted driving behavior of the vehicle controlled by the autonomous driving system and the driving scenario, the autonomous driving control module 1014 may update the autonomous driving system. For example, the autonomous driving control module 1014 replaces the driving behavior of the vehicle controlled by the autonomous driving system with the adjusted driving behavior of the vehicle controlled by the autonomous driving system.

It may be understood that the structure illustrated in FIG. 3 does not constitute a specific limitation on the autonomous driving apparatus 101. In some other embodiments, the autonomous driving apparatus 101 may include more or fewer components than the components shown in FIG. 3; alternatively, the autonomous driving apparatus 101 may include combined components of some components shown in FIG. 3; alternatively, the autonomous driving apparatus 101 may include split components of the components shown in FIG. 3, or the like. The components shown in FIG. 3 may be implemented by hardware, software, or a combination of software and hardware.

In this embodiment of this invention, the apparatus shown in FIG. 3 may alternatively be a chip or a chip system in an autonomous driving apparatus. The chip system may include a chip, or may include a chip and another discrete component.

FIG. 4 is a schematic diagram of a structure of a V2X server 20 according to an embodiment of this invention. As shown in FIG. 4, the V2X server 20 may include a driver preference and historical operation database 2011, and a highest-driver-acceptance parameter module 2012.

The driver preference and historical operation database 2011 is configured to store natural driving data of a plurality of drivers within a preset time period and at least one driving behavior of a vehicle controlled by an autonomous driving system. The highest-driver-acceptance parameter module 2012 is configured to store an autonomous driving mode that is used most frequently in at least one autonomous driving mode.

Further, the V2X server 20 may further update, based on a preset cycle period, data in the driver preference and historical operation database 2011 and the highest-driver-acceptance parameter module 2012. The preset cycle period may be preset by the V2X server 20. Alternatively, the V2X server 20 may update, by interacting with the autonomous driving apparatus 101, data in the driver preference and historical operation database 2011 and the highest-driver-acceptance parameter module 2012. For example, after updating the driving behavior of the vehicle controlled by the autonomous driving system, the autonomous driving apparatus sends, to the V2X server, a driving behavior of the vehicle controlled by an updated autonomous driving system. After receiving, from the autonomous driving apparatus, the driving behavior of the vehicle controlled by the updated autonomous driving system, the V2X server may replace, with the driving behavior of the vehicle controlled by the updated autonomous driving system, the driving behavior that is of the vehicle controlled by the autonomous driving system and that is in the V2X server.

In a possible design, the V2X server 20 may further include the driver online adaptation module 1015 in FIG. 2. For a function of the driver online adaptation module 1015, refer to the foregoing description. Details are not described herein again.

It may be understood that the structure illustrated in FIG. 4 does not constitute a specific limitation on the V2X server 20. In some other embodiments, the V2X server 20 may include more or fewer components than the components shown in FIG. 4; alternatively, the V2X server 20 may include combined components of some components shown in FIG. 4; alternatively, the V2X server 20 may include split components of the components shown in FIG. 4, or the like. The components shown in FIG. 4 may be implemented by hardware, software, or a combination of software and hardware.

In this embodiment of this invention, the apparatus shown in FIG. 4 may alternatively be a chip or a chip system in a V2X server. The chip system may include a chip, or may include a chip and another discrete component.

In embodiments of this invention, the word such as "example" or "for example" is used to represent giving an example, an illustration, or a description. Any embodiment or design scheme described as an "example" or "for example" in embodiments of this invention should not be explained as being more preferred or having more advantages than another embodiment or design scheme. Exactly, use of the word such as "example" or "for example" is intended to present a related concept in a specific manner.

The following terms "first" and "second" are merely intended for description, and shall not be understood as an indication or implication of relative importance or implicit indication of a quantity of indicated technical features. Therefore, a feature limited by "first" or "second" may explicitly or implicitly include one or more features. In the descriptions of embodiments of this invention, unless otherwise specified, "a plurality of" means two or more.

All methods in the following embodiments may be implemented in an autonomous driving apparatus having the foregoing hardware structure. With reference to the communication system shown in FIG. 1, the following describes in detail the method for adaptively optimizing an autonomous driving system provided in this embodiment of this invention.

It should be noted that, in this embodiment of this invention, the method for adaptively optimizing an autonomous driving system may be performed by an autonomous driving apparatus. For example, the autonomous driving apparatus may be the autonomous driving apparatus in FIG. 2 or FIG. 3. Alternatively, the method may be performed by a chip or a system-on-a-chip in the autonomous driving apparatus. This is not limited. The following uses an example in which the method for adaptively optimizing an autonomous driving system is performed by an autonomous driving apparatus for description.

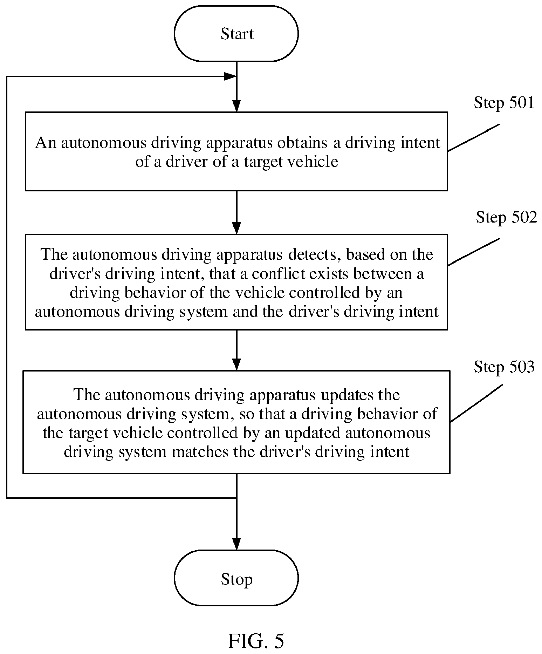

FIG. 5 is a schematic flowchart of a method for adaptively optimizing an autonomous driving system according to an embodiment of this invention. As shown in FIG. 5, the method may include the following steps.

Step 501: An autonomous driving apparatus obtains a driving intent of a driver of a target vehicle.

The target vehicle is an autonomous driving vehicle controlled by an autonomous control system. The target vehicle may be the vehicle in FIG. 1, and the target vehicle may have the components described in FIG. 2. The autonomous driving apparatus may include one or more modules in FIG. 3.

The driver may be a driver who has driven the target vehicle, or may be a driver who has not driven the target vehicle, or may be described as a new driver. The autonomous driving apparatus may detect, based on the driver's feature information, whether the driver is a driver who has driven the target vehicle or a new driver. One piece of feature information is used to identify one driver.

In a possible implementation, the driver's driving intent may be represented by a feature parameter corresponding to the driver's behavior. In other words, the autonomous driving apparatus may detect the driver's driving intent based on the driver's behavior.

The driver's behavior may include one or more of an operation behavior, a visual behavior, an emotional behavior, and a physical posture behavior that are of the driver.

The driver's operation behavior may refer to the driver's manual operation behavior on the vehicle in an autonomous driving process of the vehicle. For example, the driver's operation behavior may include the driver's operation behavior on a steering wheel of the vehicle, the driver's operation behavior on an acceleration pedal of the vehicle, and the driver's operation behavior on a deceleration pedal of the vehicle.

The autonomous driving apparatus may obtain the driver's driving intent in a plurality of manners. For example, the plurality of manners may include: the autonomous driving apparatus may input the feature parameter corresponding to the driver's behavior into a driving intent model, to obtain the driver's driving intent; the autonomous driving apparatus may determine the driver's driving intent based on the driver's operation behavior; and the autonomous driving apparatus may determine the driver's driving intent based on the driver's emotional behavior. The autonomous driving apparatus may further determine the driver's driving intent in another manner. This is not limited. These manners are described below.

Manner 1: The autonomous driving apparatus inputs the feature parameter corresponding to the driver's behavior into a driving intent model, to obtain the driver's driving intent.

An input parameter of the driving intent model is the feature parameter of the driver's behavior, and an output parameter of the driving intent is the driver's driving intent. The driving intent model may be preset by the autonomous driving apparatus.

For example, a method for determining the driving intent model may be the following: A hidden Markov model is used to train behavior features of a plurality of drivers in a preset time period and corresponding natural driving data, to obtain the driving intent model. For a training method of the hidden Markov model, refer to a current technology. Details are not described herein again.

Specifically, the autonomous driving apparatus may input the feature parameter of the driver's behavior into the driving intent model, to obtain the driver's driving intent. The autonomous driving apparatus may compare the driver's driving intent with a driving behavior of the vehicle controlled by the autonomous driving system. When the driver's driving intent is inconsistent with the driving behavior of the vehicle controlled by the autonomous driving system, the autonomous driving apparatus may determine that the driver's driving intent conflicts with the driving behavior of the vehicle controlled by the autonomous driving system.

Manner 2: The autonomous driving apparatus may determine the driver's driving intent based on the driver's operation behavior.

The driver's operation features may include an operation performed by the driver on an acceleration pedal, an operation performed by the driver on a deceleration pedal, and an operation performed by the driver on a steering wheel. The following specifically describes a method by which the autonomous driving apparatus determines the driver's driving intent based on the driver's operation feature.

For example, the autonomous driving apparatus may obtain, by using one or more sensors, a parameter feature corresponding to the driver's behavior. For example, the sensor may include one or more of an acceleration pedal position sensor, a deceleration pedal position sensor, and a steering wheel torque sensor.

The acceleration pedal position sensor is configured to detect position change information of an acceleration pedal of a target vehicle; the deceleration pedal position sensor is configured to detect position change information of a deceleration pedal of the target vehicle; and the steering wheel torque sensor is configured to detect rotation angle information of a steering wheel of the target vehicle. The autonomous driving apparatus may determine, by using change information of the acceleration pedal, the driver's operation behavior on the acceleration pedal. The autonomous driving apparatus may determine, by using change information of the deceleration pedal, the driver's operation behavior on the deceleration pedal. The autonomous driving apparatus may determine, by using torque change information of the steering wheel, the driver's operation behavior on the steering wheel. That the autonomous driving apparatus detects the driver's driving intent based on the driver's operation behavior is described as follows.

  1. The autonomous driving apparatus obtains the driver's driving intent based on the driver's operation behavior on the steering wheel of the vehicle.

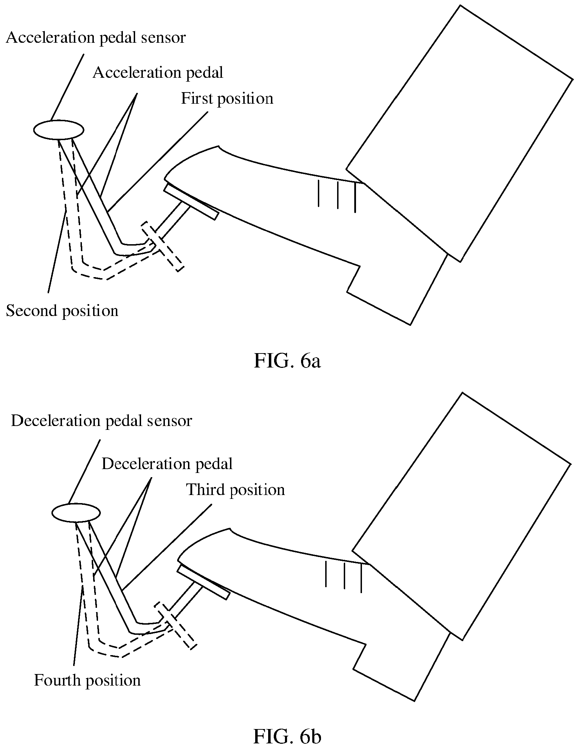

As shown in FIG. 6a, it is assumed that the autonomous driving apparatus detects that a position of the acceleration pedal of the target vehicle moves from a first position to a second position. When the acceleration pedal of the target vehicle is located in the first position, a vehicle speed of the target vehicle is a first vehicle speed; or when the acceleration pedal of the target vehicle is located in the second location, a vehicle speed of the target vehicle is a second vehicle speed. The second vehicle speed is greater than the first vehicle speed. In this case, the autonomous driving apparatus may determine that the driver's driving intent is to increase the driving speed of the target vehicle in the driving scenario.

2. The autonomous driving apparatus obtains the driver's driving intent based on the driver's operation behavior on the deceleration pedal.

As shown in FIG. 6b, it is assumed that the autonomous driving apparatus detects that a position of the deceleration pedal of the target vehicle moves from a third position to a fourth position. When the deceleration pedal of the target vehicle is located in the third position, a vehicle speed of the target vehicle is a third vehicle speed; or when the deceleration pedal of the target vehicle is located in the fourth location, a vehicle speed of the target vehicle is a fourth vehicle speed. The fourth vehicle speed is less than the third vehicle speed. In this case, the autonomous driving apparatus may determine that the driver's driving intent is to reduce the driving speed of the target vehicle in the driving scenario.

3. The autonomous driving apparatus obtains the driver's driving intent based on the driver's operation behavior on the steering wheel.

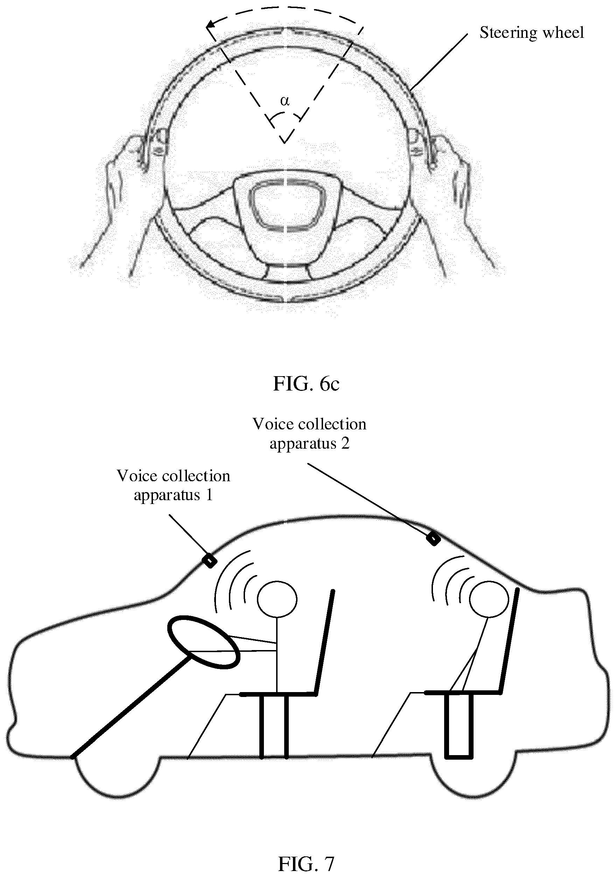

The torque change information of the steering wheel may include change information of a first direction and a second direction that are of the steering wheel. The first direction and the second direction are opposite directions. For example, as shown in FIG. 6c, when the steering wheel rotates in the first direction, the target vehicle turns towards the left of a driving direction; or when the steering wheel rotates in the second direction, the target vehicle turns towards the right of a driving direction.

For example, when the autonomous driving apparatus detects, by using the steering wheel torque sensor, that an angle at which the steering wheel rotates in the first direction is $\alpha$, the autonomous driving apparatus may determine that the driver's driving intent is expecting the target vehicle to turn towards the first direction.

Manner 3: The autonomous driving apparatus may determine the driver's driving intent based on the driver's emotional behavior.

When the driver's emotional behavior is a negative emotional behavior, the autonomous driving apparatus may determine that the driver's driving intent is being discontented with a driving behavior of the target vehicle controlled by the autonomous driving system in the driving scenario.

Further, the autonomous driving apparatus may further determine, by using the driver's physical posture behavior, whether the driver focuses on a driving behavior of the target vehicle and whether the driver is performing a second task.

When the driver is not performing the second task, the autonomous driving apparatus determines that the driver's driving intent is being discontented with a driving behavior of the vehicle controlled by the autonomous driving system. In other words, in the driving scenario, the driver's driving intent conflicts with the driving behavior of the vehicle controlled by the autonomous driving system.

The driver's visual behavior and physical posture behavior may be used to reflect the driver's focus level on a driving behavior of the target vehicle.

The driver's visual behavior may include the driver's head behavior and gaze behavior. For example, the driver's head behavior may include a head rotation direction, a rotation angular velocity, a rotation angle, and the like that are of the driver. The driver's gaze behavior includes a blinking frequency, an eye closing time period, and the like that are of the driver. Certainly, the driver's visual behavior may further include another eye behavior of the driver. This is not limited.

The driver's physical posture behavior may be further used to determine the driver's second behavior. For example, the second behavior may be another behavior other than the behavior of focusing on a driving behavior of the target vehicle. For example, the second behavior may include the following behaviors: The driver uses a mobile phone, the driver talks with a person in another seat, and the like.

The driver's emotional behavior is used to reflect whether the driver is contented with a driving behavior of the target vehicle controlled by the autonomous driving system. The driver's emotional behavior may include the driver's facial expression and language feature.

In an example, the autonomous driving apparatus may obtain a plurality of types of images of the driver in a preset time period by using a photographing apparatus. The autonomous driving apparatus may recognize the plurality of images, to obtain a visual behavior, a physical posture behavior, and a facial expression that are of the driver. The preset time period may be preset based on a requirement.

In still another example, the autonomous driving apparatus may obtain the driver's voice information by using a voice collection apparatus. For example, the voice collection apparatus may be a microphone or the like. The autonomous driving apparatus may recognize the driver's voice information, to obtain the driver's language feature.

The driver's facial expression may include a first facial expression and a second facial expression. The driver's language feature may include a first language feature and a second language feature.

For example, a first facial expression library and a second facial expression library may be preset in the autonomous driving apparatus. After obtaining the driver's facial expression, the autonomous driving apparatus matches the driver's facial expression with each facial expression in the first facial expression library and the second facial expression library, to determine whether the driver's facial expression belongs to a first facial expression or a second facial expression.

For example, when similarity between the driver's facial expression and a facial expression in the first facial expression library is greater than or equal to a first preset threshold, the autonomous driving apparatus may determine that the driver's facial expression is a first facial expression. Alternatively, when similarity between the driver's facial expression and a facial expression in the second facial expression library is greater than or equal to a second preset threshold, the autonomous driving apparatus may determine that the driver's facial expression is a second facial expression. The first preset threshold and the second preset threshold may be preset based on a requirement. This is not limited.

A plurality of voice collection apparatuses may be disposed in the target vehicle. The plurality of voice collection apparatuses are communicatively connected to the autonomous driving apparatus. The autonomous driving apparatus may obtain, by using the plurality of voice collection apparatuses, a voice of a person inside the target vehicle, and recognize the voice of the person inside the target vehicle, to determine a source of the voice. For example, the autonomous driving apparatus may identify the source of the voice based on audio of the voice, to determine the source of the voice. When determining that the source of the voice includes a plurality of seats and the plurality of seats include the driver's seat, the autonomous driving apparatus determines that the driver is talking with a person in another seat.

For example, as shown in FIG. 7, an example in which a target vehicle includes a front-row vehicle seat and a rear-row vehicle seat is used. A voice collection apparatus 1 and a voice collection apparatus 2 may be disposed in the target vehicle. The voice collection apparatus 1 is configured to collect voices of a driver and a person in a front passenger seat, and the voice collection apparatus 2 is configured to collect a voice of a person in the rear row of the target vehicle. The voice collection apparatus 1 and the voice collection apparatus 2 may send collected voices to an autonomous driving apparatus, to enable the autonomous driving apparatus to recognize the voices, so that the autonomous driving apparatus may determine whether the driver is talking with a person in another seat. For example, the voice collection apparatus 1 may collect the driver's voice, and the voice collection apparatus 2 may collect a voice of a person in the rear row of the target vehicle. In this case, the autonomous driving apparatus may determine that the driver is talking with the person in the rear row. In the target vehicle, a voice collection apparatus may be further disposed at each vehicle seat, so that the autonomous driving apparatus can determine a source of a voice more accurately.

For a method for determining the driver's first language feature and second language feature, refer to the foregoing method for determining the first facial expression and the second facial expression. Details are not described herein again.

It should be noted that the first facial feature and the first language feature may be used to represent that the driver's emotional behavior is a positive emotional behavior. When the driver's emotional behavior is a positive emotional behavior, the driver's driving intent is being contented with a driving behavior of the target vehicle controlled by the autonomous control system.

For example, the first facial feature may include being happy, contented, and the like, and the first language feature may include being not bad, good, and the like.

It should be noted that the second facial feature and the second language feature may be used to represent that the driver's emotional behavior is a negative emotional behavior. When the driver's emotional behavior is a negative emotional behavior, the driver's driving intent is being discontented with a driving behavior of the target vehicle controlled by the autonomous control system.

For example, the second facial expression may include being anxious, angry, and the like. The second language feature may include being really bad, not good to use, and the like.

In another possible implementation, the autonomous driving apparatus may input the feature parameter corresponding to the driver's behavior into a driving intent model, to obtain the driver's driving intent.

Step 502: The autonomous driving apparatus detects, based on the driver's driving intent, that a conflict exists between a driving behavior of the target vehicle controlled by the autonomous control system and the driver's driving intent.

In a possible implementation, the autonomous driving apparatus may detect, based on the feature parameter corresponding to the driver's behavior, whether a conflict exists between the driver's driving intent and the driving behavior of the vehicle controlled by the autonomous control system. For example, when the feature parameter corresponding to the driver's behavior exceeds a preset range, and/or a time period for which the feature parameter corresponding to the driver's behavior exceeds the preset range is greater than or equal to a first preset value, and/or a quantity of times that the feature parameter corresponding to the driver's behavior exceeds the preset range is greater than or equal to a second preset value, the autonomous driving apparatus may detect that a conflict exists between the driver's driving intent and the driving behavior of the vehicle controlled by the autonomous control system.

That a quantity of times that the feature parameter corresponding to the driver's behavior exceeds the preset range is greater than or equal to a second preset value may alternatively be described as that a quantity of times that the feature parameter corresponding to the driver's behavior exceeds the preset range within a preset time period is greater than or equal to a second preset value. The preset time period may be preset based on a requirement.

For example, as shown in FIG. 6a, a change range of the acceleration pedal corresponding to the target vehicle in the autonomous driving system is a first range. The first range may be preset based on a requirement.

When a change range in which the acceleration pedal moves from the first position to the second position exceeds the first range, and/or a time period for which a change range in which the acceleration pedal moves from the first position to the second position exceeds the first range exceeds a first threshold, and/or a quantity of times that a change range in which the acceleration pedal moves from the first position to the second position exceeds the first range exceeds a second threshold, the autonomous driving apparatus may detect that a conflict exists between the driving behavior of the target vehicle controlled by the autonomous driving system and the driver's driving intent.

For another example, as shown in FIG. 6b, a change range of the deceleration pedal corresponding to the target vehicle in the autonomous driving system is a second range. The second range may be preset based on a requirement.

When a change range in which the deceleration pedal moves from the third position to the fourth position exceeds the second range, and/or a time period for which a change range in which the deceleration pedal moves from the third position to the fourth position exceeds the second range exceeds a third threshold, and/or a quantity of times that a change range in which the deceleration pedal moves from the third position to the fourth position exceeds the second range exceeds a fourth threshold, the autonomous driving apparatus may detect that a conflict exists between the driving behavior of the target vehicle controlled by the autonomous driving system and the driver's driving intent.

For another example, as shown in FIG. 6c, the driving behavior of the target vehicle controlled by the autonomous driving system is as follows: A threshold of an angle at which the target vehicle turns in the first direction is a first angle. The first angle may be preset based on a requirement.

When an angle $\alpha$ by which the steering wheel rotates in the first direction is greater than the first angle, and/or a time period for which an angle $\alpha$ by which the steering wheel rotates in the first direction is greater than the first angle exceeds a fifth threshold, and/or a quantity of times that an angle $\alpha$ by which the steering wheel rotates in the first direction is greater than the first angle exceeds a sixth threshold, the autonomous driving apparatus may detect that a conflict exists between the driving behavior of the target vehicle controlled by the autonomous driving system and the driver's driving intent.

It should be noted that in the foregoing three examples, the first threshold to the sixth threshold may be preset based on a requirement.

Further, to more accurately determine that the driver's driving intent conflicts with the driving behavior of the vehicle controlled by the autonomous driving system, the autonomous driving apparatus may determine a time period of the conflict/a quantity of conflicts between the driver's driving intent and the driving behavior of the vehicle controlled by the autonomous driving system. When the time period of the conflict is greater than or equal to a preset time period/the quantity of conflicts is greater than or equal to a preset quantity of times, the autonomous driving apparatus may determine that the driver's driving intent conflicts with the driving behavior of the target vehicle controlled by the autonomous driving system. The preset time period and the preset quantity of times may be preset. This is not limited. An example in which the autonomous driving apparatus determines the driver's driving intent based on the driver's visual behavior is used below to separately describe in detail a method by which the autonomous driving apparatus determines the time period of the conflict and the quantity of conflicts between the driver's driving intent and the driving behavior of the vehicle controlled by the autonomous driving system.

1. The autonomous driving apparatus determines the time period of the conflict between the driver's driving intent and the driving behavior of the vehicle controlled by the autonomous driving system.

The autonomous driving apparatus may perform statistics on a time period of the conflict between the driver's driving intent and the driving behavior of the vehicle controlled by the autonomous driving system. When the time period of the conflict is greater than or equal to a preset time period, the autonomous driving apparatus may determine that the driver's driving intent conflicts with the driving behavior of the vehicle controlled by the autonomous driving system. When the time period of the conflict is less than the preset time period, the autonomous driving apparatus may determine the driver's driving intent does not conflict with the driving behavior of the vehicle controlled by the autonomous driving system.

In an example, a timer is disposed in the autonomous driving apparatus. Once detecting that the driver's driving intent is inconsistent with the driving behavior of the vehicle controlled by the autonomous driving system, the autonomous driving apparatus may trigger the timer to start timing. Steps performed by the autonomous driving apparatus are as follows.

The autonomous driving apparatus obtains the driver's visual behavior, and inputs the visual behavior into the foregoing driving intent model of the driver, to obtain the driver's driving intent.

When the autonomous driving apparatus determines that the driver's driving intent is still inconsistent with a driving behavior of the vehicle controlled by the autonomous driving system, the autonomous driving apparatus may repeatedly perform the foregoing step, until the driver's driving intent determined by the autonomous driving apparatus based on the driver's visual behavior is consistent with a driving behavior of the vehicle controlled by the autonomous driving system. When determining the driver's driving intent is consistent with the driving behavior of the vehicle controlled by the autonomous driving system, the autonomous driving apparatus triggers the timer to stop timing. The autonomous driving apparatus determines, based on a timing start time point and a timing stop time point of the timer, the time period of the conflict between the driver's driving intent and the driving behavior of the vehicle controlled by the autonomous driving system.

For example, when the timer starts timing, the autonomous driving apparatus may periodically or randomly obtain the driver's visual behavior, and determine the driver's driving intent. This is not limited.

Based on the foregoing embodiment, when the time period of the conflict between the driver's driving intent determined by the autonomous driving apparatus based on the driver's visual behavior and the driving behavior of the vehicle controlled by the autonomous driving system is greater than or equal to the preset time period, the autonomous driving apparatus determines that the driver's driving intent conflicts with the driving behavior of the vehicle controlled by the autonomous driving system.

In another possible implementation, when a feature parameter corresponding to the driver's visual behavior exceeds the preset range, and/or a feature parameter corresponding to the physical posture behavior exceeds the preset range, the autonomous driving apparatus may detect that a conflict exists between the driving behavior of the target vehicle controlled by the autonomous driving system and the driver's driving intent.

For example, a counter is disposed in the autonomous driving apparatus. Once the autonomous driving apparatus detects that the driver's driving intent is inconsistent with the driving behavior of the vehicle controlled by the autonomous driving system, the autonomous driving apparatus obtains a plurality of visual behaviors of the driver in a preset time period, and inputs the plurality of visual behaviors into the foregoing driving intent model, to obtain the driver's driving intent corresponding to each of the plurality of visual behaviors. The autonomous driving apparatus may separately compare whether the driver's driving intent corresponding to each of the plurality of visual behaviors is consistent with the driving behavior of the vehicle controlled by the autonomous driving system.

When the driver's driving intent corresponding to one visual behavior is inconsistent with the driving behavior of the vehicle controlled by the autonomous driving system, the counter records a first value; or when the driver's driving intent corresponding to one visual behavior is consistent with the driving behavior of the vehicle controlled by the autonomous driving system, the counter records a second value. When a quantity of the first values obtained through statistics performed by the counter is greater than or equal to a preset value, the autonomous driving apparatus may determine the driver's driving intent conflicts with the driving behavior of the vehicle controlled by the autonomous driving system. The preset time period and the preset value are preset. This is not limited.

For example, at a first moment, the autonomous driving apparatus determines that the driver's driving intent at the first moment is inconsistent with the driving behavior of the vehicle controlled by the autonomous driving system. In this case, the autonomous driving apparatus may obtain the driver's visual behaviors corresponding to N moments within the preset time period after the first moment. For example, the visual behaviors are respectively a visual behavior 1, a visual behavior 2, ..., and a visual behavior N, where N is a positive integer greater than or equal to 1, and time intervals between the N moments may be the same or may be different. This is not limited.

The autonomous driving apparatus may determine, based on the driving intent model of the driver, the driver's driving intent corresponding to each of the N visual behaviors. For example, the driver's driving intents determined by the autonomous driving apparatus include a driving intent 1, a driving intent 2, ..., and a driving intent N, where the visual behaviors are in a one-to-one correspondence with the driving intents. For example, the visual behavior 1 corresponds to the driving intent 1, the visual behavior 2 corresponds to the driving intent 2, and the visual behavior N corresponds to the visual behavior N.

The autonomous driving apparatus separately compares whether the N driving intents are consistent with the driving behavior of the vehicle controlled by the autonomous driving system. When the N driving intents are inconsistent with the driving behavior of the vehicle controlled by the autonomous driving system, the counter may record a first value. For example, the first value is 1. When the N driving intents are consistent with the driving behavior of the vehicle controlled by the autonomous driving system, the counter may record a second value. For example, the second value may be 0. For example, the autonomous driving apparatus compares whether the driving intent 1 is consistent with the driving behavior of the vehicle controlled by the autonomous driving system. When the driving intent 1 is inconsistent with the driving behavior of the vehicle controlled by the autonomous driving system, the counter may record 1. When the driving intent 1 is consistent with the driving behavior of the vehicle controlled by the autonomous driving system, the counter may record 0. The autonomous driving apparatus compares whether the driving intent 2 is consistent with the driving behavior of the vehicle controlled by the autonomous driving system. When the driving intent 2 is inconsistent with the driving behavior of the vehicle controlled by the autonomous driving system, the counter may add 1 based on 1. In other words, the counter may record 2. The process continues until the autonomous driving apparatus completes the comparison between the N driving intents and the driving behavior of the vehicle controlled by the autonomous driving system.

In still another possible implementation, once the autonomous driving apparatus detects that the driver's driving intent is inconsistent with the driving behavior of the vehicle controlled by the autonomous driving system, the autonomous driving apparatus obtains the driver's visual behavior, and inputs the visual behavior into the foregoing driving intent model, to obtain the driver's driving intent corresponding to the visual behavior. The autonomous driving apparatus compares whether the driver's driving intent corresponding to the visual behavior is consistent with the driving behavior of the vehicle controlled by the autonomous driving system.

When the driver's driving intent is inconsistent with the driving behavior of the vehicle controlled by the autonomous driving system, the counter may record a first value; or when the driver's driving intent is consistent with the driving behavior of the vehicle controlled by the autonomous driving system, the counter may record a second value.

It should be noted that the autonomous driving apparatus may cyclically perform the foregoing step 3 to step 4 in the preset time period, and then the autonomous driving apparatus may determine a quantity of times that the driver's driving intent is inconsistent with the driving behavior of the vehicle controlled by the autonomous driving system in the preset time period.

For example, at the first moment, the autonomous driving apparatus determines that the driver's driving intent at the first moment is inconsistent with a driving behavior of the vehicle controlled by the autonomous driving system. In this case, the autonomous driving apparatus may determine, based on step 3 and step 4, whether the driver's driving intent corresponding to the driver's visual behavior 2 at the second moment after the first moment is consistent with a driving behavior of the vehicle controlled by the autonomous driving system. When the driver's driving intent is inconsistent with the driving behavior of the vehicle controlled by the autonomous driving system, the counter records 1; or when the driver's driving intent is consistent with the driving behavior of the vehicle controlled by the autonomous driving system, the counter does not count or records 0. In this way, the autonomous driving apparatus may repeatedly perform the foregoing step 4 and step 4, and determine the quantity of times that the driver's driving intent is inconsistent with the driving behavior of the vehicle controlled by the autonomous driving system in the preset time period.

In still another possible implementation, when the driver's emotional behavior is a negative emotional behavior, the autonomous driving apparatus may determine that the driver's driving intent is being discontented with the driving behavior of the target vehicle controlled by the autonomous driving system. In other words, the autonomous driving apparatus may detect that a conflict exists between the driving behavior of the target vehicle controlled by the autonomous driving system and the driver's driving intent.

Step 503: The autonomous driving apparatus updates the autonomous driving system.

A driving behavior of the target vehicle controlled by an updated autonomous driving system matches the driver's driving intent.

In a possible implementation, the autonomous driving apparatus may obtain, based on the driver's driving intent and driving data corresponding to the driving behavior of the target vehicle controlled by the autonomous driving system, a first feature parameter; the autonomous driving apparatus inputs the first feature parameter into a preset neural network model, to obtain a first driving behavior; and the autonomous driving apparatus updates the autonomous driving system based on the first driving behavior.

The first feature parameter represents the driver's driving intent and the driving data corresponding to the driving behavior of the target vehicle controlled by the autonomous driving system.

For example, the first feature parameter may be a feature vector. The feature vector may include a plurality of parameters, and each of the plurality of parameters may be used to represent one piece of driving data. For example, the first feature parameter may include a distance between the target vehicle and another vehicle, a vehicle speed, a driving direction, a steering angle, and the like that are of the target vehicle.

The preset neural network model is used to determine a driving behavior that matches the driver's driving intent. The preset neural network model may be preset. For example, the preset neural network model may be a deep feedforward neural network regression model.

For example, the preset neural network model is obtained through training based on a plurality of pieces of historical driving data of the driver. An input of the preset neural network model is the feature parameter, and an output is the first driving behavior that meets the driver's driving intent. In other words, the first driving behavior is a driving behavior that meets the driver's driving intent. The first driving behavior may include one or more pieces of driving data. For example, the one or more pieces of driving data may include a vehicle speed of the vehicle, a distance from a preceding vehicle, or the like. For a training method of the preset neural network model, refer to a current technology. Details are not described herein again.

It may be understood that, in this embodiment of this invention, the autonomous driving apparatus may input the foregoing feature parameter into the preset neural network model in a form of a feature vector, to obtain an output vector corresponding to the feature vector. The output vector may include one or more parameters, and each of the one or more parameters corresponds to one driving behavior.

That the autonomous driving apparatus updates the autonomous driving system based on the first driving behavior means that the autonomous driving apparatus may compare the first driving behavior with the driving behavior of the vehicle controlled by the autonomous driving system, and update the autonomous driving system based on a comparison result. For example, the autonomous driving apparatus may replace the driving behavior of the vehicle controlled by the autonomous driving system with the first driving behavior.

For example, the first driving behavior determined by the autonomous driving apparatus is to increase a vehicle speed of the target vehicle to a first vehicle speed. The driving behavior of the target vehicle controlled by the autonomous driving system is to keep the vehicle speed of the target vehicle as a second vehicle speed. The first vehicle speed is greater than the second vehicle speed. The autonomous driving apparatus may replace a vehicle speed of the target vehicle controlled by the autonomous driving system with the first vehicle speed, so that the vehicle speed of the target vehicle controlled by the autonomous driving system is the first vehicle speed.

In this embodiment of this invention, in an autonomous driving process of the target vehicle, the autonomous driving apparatus may cyclically perform the foregoing step 501 to step 503 until the target vehicle stops driving. That the target vehicle stops driving includes the following cases: The driver controls the target vehicle to stop driving, or the autonomous driving system of the target vehicle is disabled by the driver and is replaced by, for example, manual driving by the driver.

Based on the technical solution in FIG. 5, when detecting that the driving intent of the driver of the autonomous driving vehicle controlled by the autonomous driving system conflicts with the driving behavior of the vehicle controlled by the autonomous driving system, the autonomous driving apparatus updates the autonomous driving system, so that a driving behavior of the vehicle controlled by an updated autonomous driving system matches the driver's driving intent. Based on this, a subsequent driving behavior controlled by the updated autonomous driving system can meet the driver's driving requirement. In this way, a problem that a driving behavior of a vehicle controlled by an autonomous driving system conflicts with a driver's driving intent is resolved.

In a possible implementation of the method shown in FIG. 5, the method provided in this embodiment of this invention may further include the following: The autonomous driving apparatus detects whether the driver of the target vehicle is a new driver.

The new driver means a person who has not driven the target vehicle.

In an example, when the autonomous driving apparatus detects that the target vehicle is started, the autonomous driving apparatus may obtain the driver's feature information, and match the driver's feature information with feature information that of a plurality of drivers and that is stored in the autonomous driving apparatus. When the driver's feature information does not match feature information of each of the plurality of drivers, the autonomous driving apparatus determines that the driver of the target vehicle is a new driver; or when the driver's feature information matches feature information of each of the plurality of drivers, the autonomous driving apparatus determines that the driver of the target vehicle is a driver who has driven the target vehicle.

In another possible implementation of the method shown in FIG. 5, according to the method provided in this embodiment of this invention, the autonomous driving apparatus may further determine, based on the feature information of the driver of the target vehicle, a driving mode of the target vehicle controlled by the autonomous driving system.

When the driver of the target vehicle is not a new driver, the autonomous driving apparatus determines an autonomous driving mode of the target vehicle based on the driver's feature information. In other words, when the driver of the target vehicle is a driver who has driven the target vehicle, the autonomous driving apparatus may determine an autonomous driving mode of the target vehicle based on the driver's feature information.

For example, the autonomous driving apparatus may obtain, from the V2X server shown in FIG. 4, an autonomous driving mode that has been used by the driver, and use the used autonomous driving mode as the autonomous driving mode of the target vehicle.

Alternatively, the autonomous driving apparatus may store an autonomous driving mode historically used by the driver. The autonomous driving apparatus may use the stored autonomous driving mode used by the driver as the autonomous driving mode of the target vehicle. This is not limited.

When the driver of the target vehicle is a new driver, the autonomous driving apparatus may use a preset autonomous driving mode as the autonomous driving mode of the target vehicle. The preset autonomous driving mode may be preconfigured in the autonomous driving apparatus. Alternatively, the autonomous driving apparatus may obtain the preset autonomous driving mode from autonomous driving modes that are historically used by a plurality of drivers and that are stored in the V2X server. This is not limited. For example, the autonomous driving apparatus may select, from the autonomous driving modes historically used by a plurality of drivers, an autonomous driving mode that is most frequently used as the preset autonomous driving mode.

In still another possible implementation of the method shown in FIG. 5, the method provided in this embodiment of this invention may further include the following: The autonomous driving apparatus obtains a driving behavior of the target vehicle controlled by the autonomous driving system.

In different driving scenarios, the target vehicle has different driving behaviors under control of the autonomous driving system. Specifically, the driving scenarios and the driving behaviors that are of the target vehicle controlled by the autonomous driving system and that correspond to the driving scenarios may be shown in Table 1. Details are not described again.

A first driving scenario as an example. The autonomous driving apparatus may obtain the driver's driving intent in the first driving scenario and a driving behavior that is of the target vehicle controlled by the autonomous control system and that corresponds to the first driving scenario. When the autonomous driving apparatus detects that a conflict exists between the driver's driving intent and the driving behavior of the target vehicle controlled by the autonomous control system in the first scenario, the autonomous driving apparatus may update the autonomous driving system.

It should be noted that, in this embodiment of this invention, after the autonomous driving apparatus determines that the driving behavior of the target vehicle conflicts with the driver's driving intent in the first scenario, the autonomous driving apparatus may update, in a driving process of the target vehicle, the driving behavior that is in the autonomous driving system and that corresponds to the first driving scenario. Alternatively, after the target vehicle stops driving, the autonomous driving apparatus may update the autonomous driving behavior that is in the autonomous driving system and that corresponds to the first driving scenario. For example, after the target vehicle arrives at a destination, the autonomous driving apparatus may update the autonomous driving behavior that is in the autonomous driving system and that corresponds to the first driving scenario. This is not limited.

For example, in a process in which the target vehicle autonomously travels, the autonomous driving apparatus may record the driver's driving intents and a plurality of driving scenarios that conflict with the driver's driving intents. For example, the driving scenarios recorded by the autonomous driving apparatus include a driving scenario 1 and a driving scenario 2. The driving scenario 1 and the driving scenario 2 are driving scenarios in which driving behaviors of the vehicle controlled by the autonomous driving system conflict with the driver's driving intents. After the vehicle ends autonomous driving, the autonomous driving apparatus may update a driving behavior that is of the vehicle controlled by the autonomous driving system and that corresponds to the driving scenario 1, and update a driving behavior that is of the vehicle controlled by the autonomous driving system and that corresponds to the driving scenario 2.

For example, the autonomous driving apparatus may obtain the first driving scenario of the target vehicle in a plurality of manners. For example, the plurality of manners may include the following: The autonomous driving apparatus obtains the first driving scenario of the target vehicle by using a device of the target vehicle. For example, the autonomous driving apparatus may obtain the first driving scenario of the target vehicle by using a plurality of types of sensors. The autonomous driving apparatus obtains the first driving scenario of the target vehicle through interaction with another apparatus. For example, the autonomous driving apparatus may obtain the first driving scenario of the target vehicle through interaction with the V2X server, or the autonomous driving apparatus may obtain the first driving scenario of the target vehicle through interaction with an autonomous driving apparatus of another vehicle. Alternatively, the autonomous driving apparatus may obtain the first driving scenario of the target vehicle in one or more of the foregoing plurality of manners. This is not limited. The following describes the foregoing plurality of manners.

1. The autonomous driving apparatus may obtain the first driving scenario of the target vehicle by using a plurality of types of sensors.

The autonomous driving apparatus may collect traffic information of a road on which the target vehicle travels by using the plurality of sensors, and integrate the collected traffic information of the road on which the target vehicle travels, to obtain the first driving scenario of the target vehicle.

In this embodiment of this invention, the plurality of sensors may include a laser radar, a millimeter-wave radar, an ultrasonic radar, a monocular or binocular camera, and the like. This is not limited.

For example, the autonomous driving apparatus may obtain, by using a laser radar, a vehicle speed of a vehicle around the target vehicle, a speed of a pedestrian, and the like. The autonomous driving apparatus may obtain, by using a monocular or binocular camera, road condition information, a quantity of vehicles, a quantity of pedestrians, and the like that are of a road on which the target vehicle travels. This is not limited.

2. The autonomous driving apparatus may obtain the first driving scenario of the target vehicle through interaction with the V2X server.

The autonomous driving apparatus may send, to the V2X server, request information used to request the first driving scenario. Correspondingly, the V2X server receives, from the autonomous driving apparatus, the request information used to request the first driving scenario. The V2X server determines the first driving scenario based on the request information, and sends the first driving scenario to the autonomous driving apparatus.

For example, the autonomous driving apparatus may send coordinate information (for example, global positioning system (global positioning system, GPS) coordinates) of the target vehicle to the V2X server by using the vehicle body antenna in FIG. 2. After receiving the coordinate information of the target vehicle, the V2X server determines, based on the coordinate information, the driving scenario corresponding to the coordinate information. The V2X server sends, to the autonomous driving apparatus, the first driving scenario corresponding to the coordinate information. Correspondingly, the autonomous driving apparatus may receive, by using the vehicle body antenna, the first driving scenario corresponding to the coordinate information.

3. The autonomous driving apparatus may obtain the first driving scenario of the target vehicle through interaction with another vehicle.

For example, for this manner, refer to the manner in which the autonomous driving apparatus interacts with the V2X server to obtain the first driving scenario of the target vehicle. Details are not described herein again.

For example, after obtaining the first driving scenario, the autonomous driving apparatus may obtain the driver's behavior feature in the first driving scenario, and determine the driver's driving intent based on the driver's behavior feature.

The driver's behavior feature may be used to represent whether the driver is contented with a driving behavior of the target vehicle controlled by the autonomous driving system. For example, the driver's behavior features may include an operation feature, a visual behavior, an emotional behavior, a physical posture behavior, and the like that are of the driver. In this case, the autonomous driving apparatus may determine the driver's driving intent based on one or more of these behavior features. Specifically, for related descriptions of the driver's behavior feature and an implementation in which a vehicle-mounted apparatus determines the driver's driving intent based on the driver's behavior feature, refer to the technical solution shown in FIG. 5.

Based on this possible implementation, when the autonomous driving apparatus detects that the driving intent of the driver of the vehicle conflicts with the driving behavior of the vehicle controlled by the autonomous driving system in the first driving scenario, the autonomous driving apparatus may adjust the driving behavior corresponding to the autonomous driving system to a driving behavior that meets the driver's driving intent in the first driving scenario, so that when the autonomous driving apparatus subsequently faces a driving scenario of a same type, a driving behavior of the vehicle controlled by the autonomous driving system can meet the driver's requirement. In this way, a problem that a driving behavior of a vehicle controlled by an autonomous driving system conflicts with a driver's driving intent is resolved.

In still another possible implementation of the method shown in FIG. 5, the method provided in this embodiment of this invention may further include the following: The autonomous driving apparatus determines an autonomous driving mode of the target vehicle in the first driving scenario.

For related descriptions of the autonomous driving mode, refer to the foregoing descriptions. Details are not described again.

That the autonomous driving apparatus determines an autonomous driving mode of the target vehicle in the first driving scenario may include the following: The autonomous driving apparatus performs automatic selection; or the driver performs manual selection. In the case in which the autonomous driving apparatus performs automatic selection, for example, the autonomous driving apparatus automatically selects, based on some related information of the first driving scenario, the autonomous driving mode of the target vehicle from a plurality of preconfigured autonomous driving modes. In the case in which the driver performs manual selection, for example, when the driver expects autonomous driving, the driver manually selects a proper autonomous driving mode, and triggers the autonomous driving apparatus to perform autonomous driving based on the autonomous driving mode selected by the driver. Specifically, for this manner, refer to the following manner 1 or manner 2.

Manner 1: The autonomous driving apparatus performs automatic selection.

The autonomous driving apparatus may select, based on the driver's feature information, the autonomous driving mode from one or more autonomous driving modes. Feature information of one driver is used to uniquely identify the driver. The one or more autonomous driving modes may be autonomous driving modes stored in the autonomous driving apparatus, or may be autonomous driving modes obtained by the autonomous driving apparatus from the V2X server in FIG. 2.

For example, the autonomous driving apparatus may obtain the driver's image information by using a photographing apparatus, and the image information may be video information or picture information. The image information may include the driver's facial feature or pupil feature. The autonomous driving apparatus may determine the driver's feature information by recognizing the driver's image information. Alternatively, the autonomous driving apparatus may send the driver's image information to the V2X server, so that the V2X server recognizes the driver's image information, to obtain the driver's feature information.

For example, the autonomous driving apparatus may match the driver's feature information with the feature information that of a plurality of drivers and that is stored in the autonomous driving apparatus, to determine an autonomous driving mode matching the driver's feature information. Feature information of each of the plurality of drivers has a corresponding autonomous driving mode. For example, the autonomous driving apparatus may use, as the autonomous driving mode of the driver of the target vehicle, an autonomous driving mode corresponding to a driver's feature information that is in the feature information of the plurality of drivers and whose similarity with the feature information of the driver of the target vehicle is greater than a preset value. The preset value may be preset by the autonomous driving apparatus. This is not limited.

For another example, the autonomous driving apparatus may alternatively send the obtained feature information of the driver to the V2X server. After receiving the driver's feature information, the V2X server may match the driver's feature information with drivers' feature information corresponding to the one or more autonomous driving modes, and select and determine, from the one or more autonomous driving modes, the autonomous driving mode matching the driver's feature information. After determining the autonomous driving mode matching the driver's feature information, the V2X server may send, to the autonomous driving apparatus, the autonomous driving mode matching the driver's feature information. Correspondingly, after receiving, from the V2X server, the autonomous driving mode matching the driver's feature information, the autonomous driving apparatus may control, based on the autonomous driving mode matching the driver's feature information, the target vehicle to perform autonomous driving. For specific details, refer to the foregoing descriptions of the manner in which the autonomous driving apparatus determines the autonomous driving mode of the driver of the target vehicle. Details are not described herein again.

Manner 2: The driver performs manual selection.

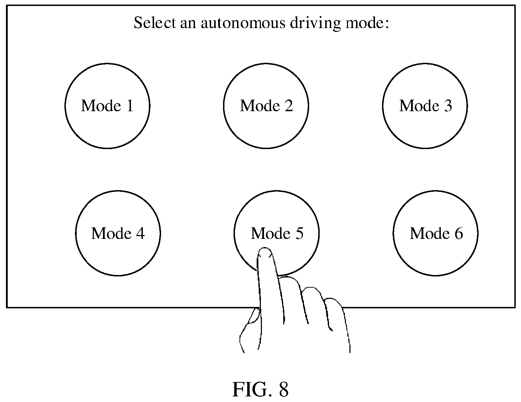

In Manner 2, in a possible design, the autonomous driving mode may be an autonomous driving mode manually selected by the driver after the vehicle is started. For example, a display apparatus may be disposed in the target vehicle. When detecting that the target vehicle is started, the autonomous driving apparatus may trigger the display apparatus to display a display interface shown in FIG. 8. The driver may select, based on a requirement, an autonomous driving mode on the display interface. After detecting an operation instruction from the driver, the autonomous driving apparatus may determine, based on the operation instruction from the driver, an autonomous driving mode corresponding to the operation instruction.

For example, the display interface in FIG. 8 may include a plurality of touch buttons: "mode 1" to "mode 6". Each touch button corresponds to one type of autonomous driving mode. When a driver taps a touch button, the autonomous driving apparatus may be triggered to obtain an autonomous driving mode corresponding to the touch button. For example, when the driver taps a touch button "mode 5", the autonomous driving apparatus may be triggered to obtain an autonomous driving mode corresponding to the touch button "mode 5".

In Manner 2, in another possible design, the driver may manually select an autonomous driving mode by using a terminal corresponding to the target vehicle, and trigger the terminal corresponding to the target vehicle to notify the autonomous driving apparatus of the selected autonomous driving mode. The autonomous driving apparatus determines, based on the notification from the terminal, the autonomous driving mode of the target vehicle in the first driving scenario.

The terminal corresponding to the autonomous driving apparatus may include any apparatus for controlling the target vehicle, for example, a smartphone, a removable hard disk, a personal notebook computer, or a tablet computer. This is not limited.

For example, the terminal is a smartphone. The driver sends, to the autonomous driving apparatus in a wired manner or a wireless manner by using the mobile phone, an autonomous driving mode stored in a terminal such as the mobile phone. For example, in the wired manner, the autonomous driving apparatus may be connected through a universal serial bus (universal serial bus, USB), a Type-C, or the like. In the wireless manner, the autonomous driving apparatus may be connected through Bluetooth, wireless fidelity (wireless fidelity, Wi-Fi), or the like. This is not limited. Correspondingly, the autonomous driving apparatus may receive the autonomous driving mode from the smartphone.

In still another possible implementation of the method shown in FIG. 5, before step 503, the method provided in this embodiment of this invention may further include the following steps.

S1: The autonomous driving apparatus determines a first feature parameter based on the driver's driving intent and a driving behavior of the vehicle controlled by the autonomous driving system.

The first feature parameter may be a feature vector. The following uses an example in which the first feature parameter is a feature vector, to separately describe feature vectors determined by the autonomous driving apparatus based on the driver's driving intents and driving behaviors of the vehicle controlled by the autonomous driving system when driving scenarios are as follows: a scenario of following a vehicle in a direction of traffic in city rush hours, a scenario of following a vehicle in a direction of traffic in city rush hours, and a scenario in which a vehicle cuts in actively in city rush hours.

It should be noted that after the autonomous driving apparatus determines the driver's driving intent, the autonomous driving apparatus may represent the driver's driving intent and the vehicle information by using a number or a character, to determine a feature parameter corresponding to a driving scenario.

For example, $v+$ indicates that the driver's driving intent is to increase a vehicle speed of the vehicle, $v-$ indicates that the driver's driving intent is to reduce the vehicle speed of the vehicle, s indicates that the driver's driving intent is to pull over, s indicates that the driver's driving intent is to approach a left lane, r indicates that the driver's driving intent is to approach a right lane, $l+v$ indicates that the driver's driving intent is to increase the vehicle speed when the left lane is approached, $l-v$ indicates that the driver's driving intent is to reduce the vehicle speed when the left lane is approached, and the like. The driver's driving intent may further be represented in another manner. This is not limited.

For another example, a vehicle type may be represented by a number or a character. For example, a number is used to indicate the vehicle type. "1" may indicate that the vehicle type is a car, "2" may indicate that the vehicle type is a truck, and "3" may indicate that the vehicle type is a bus. This is not limited.

Driving scenario 1: The driving scenario is following a vehicle in a direction of traffic in city rush hours.

When the vehicle follows a vehicle in a direction of traffic, a driving parameter of the target vehicle is related to vehicle information of a preceding vehicle. Therefore, the autonomous driving apparatus may construct a feature vector based on the vehicle information of the target vehicle and the vehicle information of the preceding vehicle. For example, the feature vector determined by the autonomous driving apparatus may be the following:

$$f = \{v+, d_f, v_f, v_e, s_f, 1\}.$$

In the vector, $d_f$ represents a distance between the target vehicle and the preceding vehicle, $v_f$ represents a vehicle speed of the preceding vehicle, $v_e$ represents a vehicle speed of the target vehicle, $s_f$ represents a size of the preceding vehicle, and $i_f$ represents a vehicle type of the preceding vehicle. Each variable in the feature vector may include a plurality of dimensions. For example, the size of the vehicle may include three dimensions: a vehicle length, a vehicle width, and a vehicle height. The vehicle type of the vehicle may include a car, a truck, a bus, and the like.

Driving scenario 2: The driving scenario is keeping driving on a lane in a direction of traffic in city rush hours.

When the target vehicle performs lane keeping, a driving parameter of the target vehicle is related to vehicle information of a preceding vehicle, vehicle information of a left-side vehicle, and vehicle information of a right-side vehicle. Therefore, the autonomous driving apparatus may construct a feature vector based on the vehicle information of the target vehicle, the vehicle information of the preceding vehicle, the vehicle information of the left vehicle, and the vehicle information of the right vehicle. For example, the feature vector determined by the vehicle apparatus may be the following:

$$f = \{v-, d_f, v_f, v_e, s_f, i_f, i_l, s_l, v_{lv}, v_{ll}, d_l, i_r, s_r, v_{rv}, v_{rl}, d_r\}.$$

For $d_f$, $v_f$, $v_e$, $s_f$, $i_f$, refer to the descriptions of the driving scenario 1. Details are not described herein again.

In the vector, $i_l$ indicates a type of the left-side vehicle, $s_l$ indicates a size of the left-side vehicle, $v_{lv}$ indicates a lateral vehicle speed of the left-side vehicle, $v_{ll}$ indicates a longitudinal vehicle speed of the left-side vehicle, and $d_l$ indicates a lateral relative distance between the left-side vehicle and the target vehicle. The lateral relative distance refers to a horizontal distance between two vehicles.

In the vector, $i_r$ indicates a type of the right-side vehicle, $s_r$ indicates a size of the right-side vehicle, $v_{rv}$ indicates a lateral vehicle speed of the right-side vehicle, $v_{rl}$ indicates a longitudinal vehicle speed of the right-side vehicle, and $d_r$ indicates a lateral relative distance between the right-side vehicle and the target vehicle.

Further, when there is no vehicle in front of or on left and right sides of the target vehicle, to ensure that dimensions of feature vectors in all driving scenarios of each main task are equal, the autonomous driving apparatus may perform supplementation processing on the feature vectors according to the following criteria:

assigning a preset value to a parameter in the feature vector, to ensure that the feature vector obtained after the assignment has no impact on driving of the target vehicle. For example, if there is no vehicle in front of the target vehicle, the settings may be as follows.

A type of the preceding vehicle is a bicycle; a size of the preceding vehicle is small enough, for example, {0, 0, 0}; a distance between the preceding vehicle and the target vehicle is a large value, for example, 3000 m; and a speed of the preceding vehicle is a large value, for example, 800 km/h.

When there is no vehicle on the left or right side of the target vehicle, for a method in which the autonomous driving apparatus performs supplementation processing on a parameter in the feature vector, refer to the foregoing method in which the autonomous driving apparatus performs supplementation processing on the parameter in the feature vector when there is no vehicle in front of the target vehicle. Details are not described herein again.

Driving scenario 3: The driving scenario is that a vehicle cuts in actively in city rush hours.

When a vehicle cuts in actively, a driving parameter of the target vehicle is related to vehicle information of a vehicle that is cut in. Therefore, the autonomous driving apparatus may construct a feature vector based on the vehicle information of the target vehicle and the vehicle information of the vehicle that is cut in. For example, the feature vector determined by the autonomous driving apparatus may be the following:

$$f = \{l - v, d_l, d_v, v_{ev}, v_{el}, v_l, i, s\}.$$

In the vector, $d_l$ indicates a longitudinal distance between the target vehicle and the vehicle that is cut in, $d_v$ indicates a lateral distance between the target vehicle and the vehicle that is cut in, $v_{ev}$ indicates a cut-in speed of the target vehicle, $v_{el}$ indicates a longitudinal speed of the target vehicle when the target vehicle cuts in, $v_l$ indicates a longitudinal speed of the vehicle that is cut in, $i$ indicates a type of the vehicle that is cut in, and $s$ indicates a size of the vehicle that is cut in.

S2: The autonomous driving apparatus inputs the feature parameter into a preset neural network model, to obtain a first driving behavior.

The preset neural network model is obtained through training based on the driver's historical driving data in a plurality of driving scenarios. An input of the preset neural network model is the feature parameter, and an output is the first driving behavior that meets the driver's driving intent. In other words, the first driving behavior is a driving behavior that meets the driver's driving intent. The first driving behavior may include one or more pieces of driving data. For example, the one or more pieces of driving data may include a vehicle speed of the vehicle, a distance from a preceding vehicle, or the like.

The preset neural network model may be preset. For example, the preset neural network model may be a deep feedforward neural network regression model.

The preset neural network model may be obtained through training based on a plurality of sample feature parameters, and one sample feature parameter corresponds to a driver's driving behavior. For a training method of the preset neural network model, refer to a current technology. Details are not described herein again.

It may be understood that, in this embodiment of this invention, the autonomous driving apparatus may input the foregoing feature parameter into the preset neural network model in a form of a feature vector, to obtain an output vector corresponding to the feature vector. The output vector may include one or more parameters, and each of the one or more parameters corresponds to one driving behavior.

For example, when the driving scenario is following a vehicle in a direction of traffic in city rush hours, a feature vector corresponding to the feature parameter is $f = \{w, d_f, v_f, v_e, s_f, i_f\} = \{v\text{-},5,40,50, (4.6, 1.7, 1.4), 1\}$. In other words, the driver's driving intent is to reduce a vehicle speed of the vehicle, a distance between the target vehicle and a preceding vehicle is 5 m, a vehicle speed of the preceding vehicle of the target vehicle is 40 km/h, a vehicle speed of the target vehicle is 50 km/h, the length, width, and height of the preceding vehicle are 4.6 m, 1.7 m, and 1.4 m respectively, and a vehicle type of the preceding vehicle is a car. The autonomous driving apparatus inputs the feature vector into the preset neural network model, to obtain an output vector {40, 0, 0, 0}. In the vector, 40 indicates that a vehicle speed of the target vehicle is 40 km/h, and the last three 0s respectively indicate that the target vehicle does not decelerate, does not pull over, and does not exit the following mode. In other words, the first driving behavior is as follows: A vehicle speed of the target vehicle is controlled to be 40 km/h.

S3: The autonomous driving apparatus presents one or more questions to the driver, and receive the driver's answer to the one or more questions. The answer to the one or more questions may be used to indicate whether to update the autonomous driving system.

For example, the autonomous driving apparatus may select one or more questions from a preset question library based on the first driving behavior and the first driving scenario. The autonomous driving apparatus may play the one or more questions with a voice play apparatus, or may display the one or more questions on a display apparatus.

The preset question library is determined based on driving behaviors of a plurality of drivers within a preset time period. An implementation process of this implementation may be as follows.

1. The autonomous driving apparatus compares a driving behavior of the vehicle controlled by the autonomous driving system with the first driving behavior, to determine whether the driving behavior of the vehicle controlled by the autonomous driving system is consistent with/the same as the first driving behavior. For example, when a difference between the driving behavior of the vehicle controlled by the autonomous driving system and the first driving behavior meets a preset condition/does not exceed a preset range, the autonomous driving apparatus determines that the driving behavior of the vehicle controlled by the autonomous driving system is consistent with/the same as the first driving behavior; or when a difference between the driving behavior of the vehicle controlled by the autonomous driving system and the first driving behavior does not meet a preset condition or exceeds a preset range, the autonomous driving apparatus determines that the driving behavior of the vehicle controlled by the autonomous driving system is inconsistent with/different from the first driving behavior.

For example, in the first driving scenario, when the target vehicle overtakes the vehicle, a driving behavior of the vehicle controlled by the autonomous driving system is to increase a vehicle speed of the target vehicle to 80 km/h. A first driving behavior is to increase the vehicle speed of the target vehicle to 81 km/h, and the preset range is {-2 km/h, 2 km/h}. Because 80 km/h-81 km/h=-1 km/h, that is, the difference between the vehicle speed of the vehicle controlled by the autonomous driving system and the vehicle speed corresponding to the first driving behavior falls within the preset range, the autonomous driving apparatus determines that the driving behavior of the vehicle controlled by the autonomous driving system is consistent with/the same as the first driving behavior.

For another example, in the first driving scenario, when the target vehicle follows a vehicle, a driving behavior of the vehicle controlled by the autonomous driving system is to control a distance between the target vehicle and the preceding vehicle to be 10 m. A first driving behavior is to control a distance between the target vehicle and the preceding vehicle to be 15 m. The preset condition is to control a distance between the target vehicle and the preceding vehicle not to exceed 12 m. Because 15 m is greater than 12 m, that is, the first driving behavior does not meet the preset condition, the autonomous driving apparatus determines that the driving behavior of the vehicle controlled by the autonomous driving system is inconsistent with/different from the first driving behavior.

When the driving behavior of the vehicle controlled by the autonomous driving system is consistent with/the same as the first driving behavior, the autonomous driving apparatus may determine that the driving behavior of the vehicle controlled by the autonomous driving system does not conflict with the driver's driving intent. Alternatively, when the driving behavior of the vehicle controlled by the autonomous driving system is inconsistent with/different from the first driving behavior, the autonomous driving apparatus may compare the driving behavior of the vehicle controlled by the autonomous driving system with the first driving behavior, to determine driving data that is in a plurality of pieces of driving data of the driving behavior of the vehicle controlled by the autonomous driving system and that is inconsistent with driving data of the first driving behavior, and determine change information of the inconsistent driving data.

2. The autonomous driving apparatus matches the inconsistent/different driving data and the change information of the inconsistent/different driving data with the preset question library, to determine a question corresponding to the inconsistent/different driving data.

3. The autonomous driving apparatus plays, in a voice form, the question corresponding to the inconsistent driving data, or displays, on a display apparatus, the question corresponding to the inconsistent driving data. The autonomous driving apparatus receives the driver's voice by using a microphone, and recognizes the driver's voice, to determine the driver's answers to the one or more questions. The driver's voice is the driver's answer to the question corresponding to the inconsistent driving data.

It should be noted that when the autonomous driving apparatus does not receive the driver's voice within a preset time period, the autonomous driving apparatus may play the question corresponding to the inconsistent driving data again, or the autonomous driving apparatus may use a preset answer as the driver's answer. The preset time period may be preset by the autonomous driving apparatus. This is not limited. For example, the preset time period is 10s. When the autonomous driving apparatus does not receive the driver's voice within 10s, the preset answer preset in the autonomous driving apparatus is a positive answer. For example, the positive answer may be "yes".

4. When the answers to the one or more questions are used to indicate to update the autonomous driving system, the autonomous driving apparatus may update the autonomous driving system.

For example, when the answer to the one or more questions is "yes", the answer to the one or more questions may be used to indicate to update the autonomous driving system.

In this embodiment of this invention, to reduce complexity of determining the driver's driving intent, a question in the question library may be set to a simple and direct question. For example, the question may be set to a determining question. Correspondingly, an answer given by the driver may be "yes" or "no".

In an example, when a driving scenario is following a vehicle in a direction of traffic in city rush hours, a corresponding question library may be shown in Table 2.

**Table 2**

| Question 1 | Do you want to accelerate? |
|---|---|
| Question 2 | Do you want to decelerate? |
| Question 3 | Do you want to pull over? |
| Question 4 | Do you want to exit the following mode? |

It should be noted that in a case in which a question played by the autonomous driving apparatus based on the questions in Table 2 is the question 1, when the driver's answer received by the autonomous driving apparatus is "yes", the autonomous driving apparatus determines that the driver's driving intent is to increase a speed of the vehicle.

The following describes a process of the foregoing implementation with reference to the problems in Table 2 and the feature vector and the output vector in the foregoing example.

1. The autonomous driving apparatus compares a driving behavior (a vehicle speed of the target vehicle is 50 km/h) of the vehicle controlled by the autonomous driving system with a first driving behavior (a vehicle speed of the target vehicle is 40 km/h), and determines that driving data in which the driving behavior of the vehicle controlled by the autonomous driving system is inconsistent with the first driving behavior is the vehicle speed of the target vehicle, and change information of the vehicle speed of the target vehicle is that the vehicle speed is reduced from 50 km/h to 40 km/h.

2. The autonomous driving apparatus matches the vehicle speed of the target vehicle and the change information of the vehicle speed with the questions in Table 2, and determines that a question corresponding to the vehicle speed of the target vehicle is the question 2 in Table 2.

3. The autonomous driving apparatus plays the question 2 in Table 2 in a voice form. The autonomous driving apparatus receives the driver's voice by using a microphone, and recognizes the driver's voice, to determine the driver's answer.

When the autonomous driving apparatus determines, based on the recognized voice, that the driver's answer is "yes", the autonomous driving apparatus may determine that the driver's driving intent is to reduce the vehicle speed of the target vehicle.

4. When determining that the driver's answer is "yes", the autonomous driving apparatus reduces the vehicle speed of the target vehicle to 40 km/h, and updates a vehicle speed in the driving behavior of the vehicle controlled by the autonomous driving system to 40 km/h.

When the autonomous driving apparatus determines, based on the recognized voice, that the driver's answer is "no", the autonomous driving apparatus may determine that the driver's driving intent is not to reduce the vehicle speed of the target vehicle.

When the driver's answer is "no", the autonomous driving apparatus may further continue to play the question 1 in Table 2. When the autonomous driving apparatus determines that the driver's answer corresponding to the question 1 in Table 2 is "no", the autonomous driving apparatus does not update the driving behavior of the vehicle controlled by the autonomous driving system.

In another example, when a driving scenario is keeping driving on a lane in a direction of traffic in city rush hours, a corresponding question library may be shown in Table 3.

**Table 3**

| Question 1 | Do you want to accelerate? |
|---|---|
| Question 2 | Do you want to decelerate? |
| Question 1 | Do you want to accelerate? |
| Question 3 | Do you want to approach a left lane? |
| Question 4 | Do you want to approach a right lane? |
| Question 5 | Do you want to pull over? |
| Question 6 | Do you want to exit the lane keeping mode? |

In still another example, when a driving scenario is that a vehicle driving in a direction of traffic cuts in actively in city rush hours, a corresponding question library may be shown in Table 4.

**Table 4**

| Question 1 | Do you want to increase a cut-in speed? |
|---|---|
| Question 2 | Do you want to reduce a cut-in speed? |
| Question 3 | Do you want to increase a cut-in distance? |
| Question 4 | Do you want to reduce a cut-in distance? |
| Question 5 | Do you want to increase a cut-in distance and a cut-in speed at the same time? |
| Question 6 | Do you want to reduce a cut-in distance and increase a cut-in speed? |
| Question 7 | Do you want to increase a cut-in distance and reduce a cut-in speed? |
| Question 8 | Do you want to reduce a cut-in distance and a cut-in speed at the same time? |
| Question 9 | Do you want to pull over? |
| Question 10 | Do you want to exit the active cut-in mode? |

It should be noted that for a process in which the autonomous driving apparatus updates, based on the questions in Table 3 and Table 4, a driving behavior of the vehicle controlled by the autonomous driving system, refer to the foregoing Table 2. Details are not described herein again. The questions in Table 2, Table 3, and Table 4 are merely examples, and each table may further include another question. This is not limited.

Further, after the autonomous driving apparatus determines the first driving behavior, the autonomous driving apparatus may further detect whether the first driving behavior is included in preset driving behaviors. The preset driving behavior may be a behavior that complies with a safe driving behavior of the target vehicle.

When the first driving behavior complies with a safe driving behavior of the target vehicle, the autonomous driving apparatus may use the first driving behavior as a driving behavior of the target vehicle controlled by the updated autonomous driving system; or when the first driving behavior does not comply with a safe driving behavior of the target vehicle, the autonomous driving apparatus may use the safe driving behavior as a driving behavior of the target vehicle controlled by the updated autonomous driving system.

For example, the autonomous driving apparatus determines that a first driving behavior is to increase the vehicle speed of the target vehicle to 80 km/h. However, when a maximum vehicle speed of the vehicle is limited to 60 km/h on a road on which the target vehicle travels, the autonomous driving apparatus detects that the first driving behavior does not comply with the safe driving behavior of the target vehicle. In this case, the autonomous driving apparatus may use the vehicle speed of 60 km/h as a vehicle speed of the vehicle controlled by an updated autonomous driving system. In other words, in a subsequent autonomous driving process of the target vehicle, a vehicle speed of the target vehicle controlled by the autonomous driving system is 60 km/h.

Further, the autonomous driving apparatus may send prompt information, where the prompt information is used to inform the driver that the target vehicle is about to speed.

Further, the method provided in this embodiment of this invention may further include the following: The autonomous driving apparatus determines feature information of a driver of the target vehicle in a second driving scenario. When the first driving scenario matches the second driving scenario, and the driver's feature information in the first driving scenario is consistent with the driver's feature information in the second driving scenario, the autonomous driving apparatus determines that a driving behavior of the target vehicle in the second driving scenario is a driving behavior in the updated autonomous driving system.

An autonomous driving mode used by the target vehicle in the second driving scenario is an updated autonomous driving mode.

That the first driving scenario matches the second driving scenario means that a similarity between the first driving scenario and the second driving scenario is greater than or equal to a preset value. That the driver's feature information in the first driving scenario is consistent with the driver's feature information in the second driving scenario means that the driver of the target vehicle in the first driving scenario and the driver of the target vehicle in the second driving scenario are a same driver.

Based on this possible implementation, when facing a same or similar driving scenario subsequently, the autonomous driving apparatus may control driving of the target vehicle based on an updated driving behavior in the autonomous driving system. This resolves a problem that a driving behavior of the vehicle controlled by the autonomous driving system still conflicts with a driver's driving intent in a driving scenario that is the same as or similar to the first driving scenario.

The following describes in detail the method shown in FIG. 5 with reference to a communication system shown in FIG. 1.

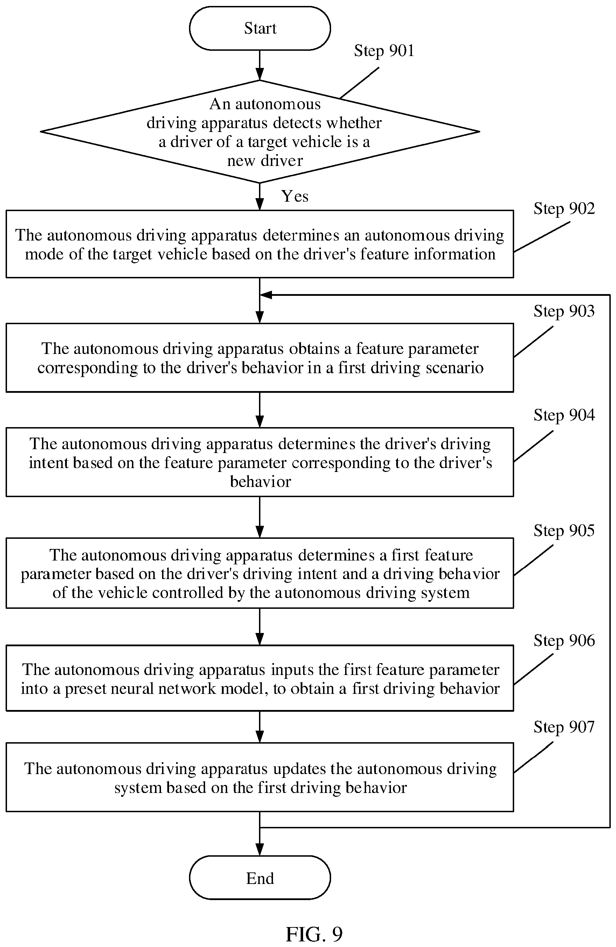

FIG. 9 shows another method for adaptively optimizing an autonomous driving system according to an embodiment of this invention. The method may include the following:

The following describes in detail the method shown in FIG. 5 with reference to a communication system shown in FIG. 1.

FIG. 9 shows a method for adaptively optimizing an autonomous driving system according to an embodiment of this invention. The method may include the following steps:

Step 901: An autonomous driving apparatus detects whether a driver of a target vehicle is a new driver.
Step 902: The autonomous driving apparatus determines an autonomous driving mode of the target vehicle based on the driver's feature information.

In other words, when the driver of the target vehicle is a driver who has driven the target vehicle, the autonomous driving apparatus may determine an autonomous driving mode of the target vehicle based on the driver's feature information.

For example, the autonomous driving apparatus may obtain, from the V2X server shown in FIG. 4, an autonomous driving mode that has been used by the driver, and use the used autonomous driving mode as the autonomous driving mode of the target vehicle. Alternatively, the autonomous driving apparatus may store an autonomous driving mode historically used by the driver. The autonomous driving apparatus may use the stored autonomous driving mode used by the driver as the autonomous driving mode of the target vehicle. This is not limited.

Step 903: The autonomous driving apparatus obtains a feature parameter corresponding to the driver's behavior in a first driving scenario.

Step 904: The autonomous driving apparatus determines the driver's driving intent based on the feature parameter corresponding to the driver's behavior.

Step 905: The autonomous driving apparatus determines a first feature parameter based on the driver's driving intent and a driving behavior of the vehicle controlled by the autonomous driving system.

Step 906: The autonomous driving apparatus inputs the first feature parameter into a preset neural network model, to obtain a first driving behavior.

Step 907: The autonomous driving apparatus updates the autonomous driving system based on the first driving behavior.

For descriptions of the foregoing step 901 to step 907, refer to the technical method in FIG. 5. Details are not described again.

The solutions in the foregoing embodiments of this invention may be combined on a premise that the solutions are not contradictory.

In the foregoing embodiments provided in this invention, the methods provided in embodiments of this invention are described from a perspective of an autonomous driving apparatus. It may be understood that, to implement the functions in the methods provided in the foregoing embodiments of this invention, the autonomous driving apparatus includes corresponding hardware structures and/or software modules for performing the functions. A person skilled in the art should be easily aware that, with reference to the algorithm steps in the examples described in embodiments disclosed in this specification, this invention may be implemented by hardware or a combination of hardware and computer software. Whether a function is performed by hardware or hardware driven by computer software depends on a particular invention and a design constraint condition that are of the technical solutions. A person skilled in the art may use different methods to implement the described functions for each particular invention, but it should not be considered that the implementation goes beyond the scope of this invention.

In embodiments of this invention, the autonomous driving apparatus may be divided into function modules based on the foregoing method examples. For example, each function module may be obtained through division for each corresponding function, or two or more functions may be integrated into one processing module. The integrated module may be implemented in a form of hardware, or may be implemented in a form of a software function module. It should be noted that, in embodiments of this invention, module division is an example, and is merely logical function division. In an actual implementation, another division manner may be used.

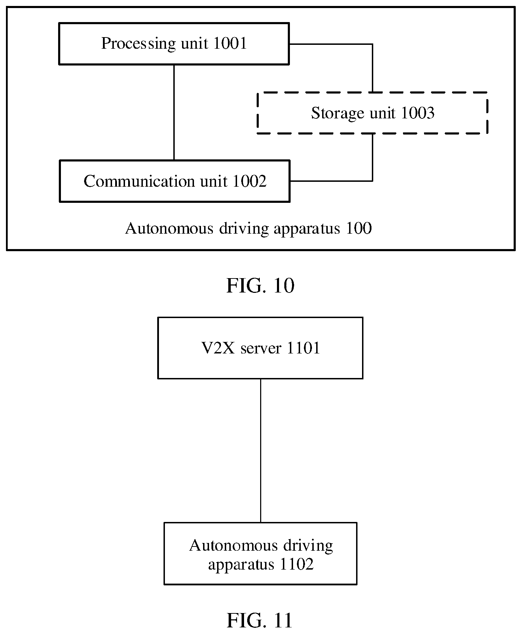

When an integrated unit is used, FIG. 10 shows a possible schematic diagram of a structure of the apparatus (denoted as an autonomous driving apparatus 100) in the foregoing embodiments. The autonomous driving apparatus 100 includes a communication unit 1002 and a processing unit 1001, and may further include a storage unit 1003. The schematic diagram of a structure shown in FIG. 10 may be used to show a structure of the autonomous driving apparatus in the foregoing embodiments. The schematic diagram of a structure shown in FIG. 10 may be used to show a structure of the V2X server in the foregoing embodiments.

When the schematic diagram of a structure shown in FIG. 10 is used to show the structure of the autonomous driving apparatus in the foregoing embodiments, the processing unit 1001 is configured to control and manage an action of the autonomous driving apparatus. For example, the processing unit 1001 is configured to: perform step 501, step 502, and step 503 in FIG. 5, perform step 901, step 902, step 904, step 905, step 906, step 906, and step 907 in FIG. 9, and perform step 903 in FIG. 9 by using the communication unit 1002; and/or perform an action performed by the autonomous driving apparatus in another process described in embodiments of this invention. The processing unit 1001 may communicate with another network entity by using the communication unit 1002. For example, the processing unit 1001 communicates with the V2X server 20 shown in FIG. 1. The storage unit 1003 is configured to store program code and data that are of the autonomous driving apparatus.

When the schematic diagram of a structure shown in FIG. 10 is used to show the structure of the autonomous driving apparatus in the foregoing embodiments, the autonomous driving apparatus 100 may be an autonomous driving apparatus, or may be a chip in an autonomous driving apparatus.

When the autonomous driving apparatus 100 is the autonomous driving apparatus, the processing unit 1001 may be a processor or a controller, and the communication unit 1002 may be a communication interface, a transceiver, a transceiver machine, a transceiver circuit, a transceiver apparatus, or the like. The communication interface is a general term, and may include one or more interfaces. The storage unit 1003 may be a memory. When the autonomous driving apparatus 100 is the chip in the autonomous driving apparatus, the processing unit 1001 may be a processor or a controller, and the communication unit 1002 may be an input interface and/or an output interface, a pin, a circuit, or the like. The storage unit 1003 may be a storage unit (for example, a register or a cache) in the chip, or may be a storage unit (for example, a read-only memory (read-only memory, ROM for short) or a random access memory (random access memory, RAM for short) that is in the autonomous driving apparatus and that is located outside the chip).

When the schematic diagram of a structure shown in FIG. 10 is used to show the structure of the V2X server in the foregoing embodiments, the processing unit 1001 is configured to control and manage an action of the V2X server. For example, the processing unit 1001 is configured to perform an action performed by the V2X server in another process described in embodiments of this invention. The processing unit 1001 may communicate with another network entity by using the communication unit 1002. For example, the processing unit 1001 communicates with the vehicle 10 shown in FIG. 1. The storage unit 1003 is configured to store program code and data that are of the V2X server.

When the schematic diagram of a structure shown in FIG. 10 is used to show the structure of the V2X server in the foregoing embodiments, the autonomous driving apparatus 100 may be a V2X server, or may be a chip in a V2X server.

When the autonomous driving apparatus 100 is the V2X server, the processing unit 1001 may be a processor or a controller, and the communication unit 1002 may be a communication interface, a transceiver, a transceiver machine, a transceiver circuit, a transceiver apparatus, or the like. The communication interface is a general term, and may include one or more interfaces. The storage unit 1003 may be a memory. When the autonomous driving apparatus 100 is the chip in the autonomous driving apparatus, the processing unit 1001 may be a processor or a controller, and the communication unit 1002 may be an input interface and/or an output interface, a pin, a circuit, or the like. The storage unit 1003 may be a storage unit (for example, a register or a cache) in the chip, or may be a storage unit (for example, a read-only memory (read-only memory, ROM for short) or a random access memory (random access memory, RAM for short) that is in the autonomous driving apparatus and that is located outside the chip).

When the integrated unit in FIG. 10 is implemented in a form of a software functional module and sold or used as an independent product, the integrated unit may be stored in a computer-readable storage medium. Based on such an understanding, the technical solutions in embodiments of this invention essentially, or a part that makes a contribution to a current technology, or all or a part of the technical solutions may be embodied in a form of a software product. The computer software product is stored in a storage medium, and includes several instructions for instructing a computer device (which may be a personal computer, a server, a first access network device, or the like) or a processor (processor) to perform all or some of the steps of the methods described in embodiments of this invention. The storage medium for storing the computer software product includes: any medium that can store program code, such as a USB flash drive, a removable hard disk, a read-only memory, a random access memory, a magnetic disk, or an optical disc.

A unit in FIG. 10 may alternatively be referred to as a module. For example, a processing unit may be referred to as a processing module.

FIG. 11 shows an example diagram of a communication system according to an embodiment of this invention. The communication system includes a V2X server 1101 and an autonomous driving apparatus 1102.

The V2X server 1101 is configured to perform the action performed by the V2X server in the foregoing embodiment. For example, the V2X server 1101 sends a preset autonomous driving mode to the autonomous driving apparatus.

The autonomous driving apparatus 1102 is configured to perform the action performed by the autonomous driving apparatus in the foregoing embodiment. For example, the autonomous driving apparatus 1102 is configured to perform the steps in FIG. 5 and FIG. 9.

In an implementation process, the steps in the method provided in this embodiment may be completed by using a hardware integrated logic circuit in the processor, or by using instructions in a form of software. The steps of the methods disclosed with reference to embodiments of this invention may be directly performed and completed by a hardware processor, or may be performed and completed by using a combination of hardware in the processor and a software module.

The processor in this invention may include but is not limited to at least one of the following computing devices that run software, such as a central processing unit (central processing unit, CPU), a microprocessor, a digital signal processor (DSP), a microcontroller unit (microcontroller unit, MCU), or an artificial intelligence processor. Each computing device may include one or more cores configured to execute software instructions to perform an operation or processing. The processor may be an independent semiconductor chip, or may be integrated with another circuit into a semiconductor chip. For example, the processor may form a SoC (a system-on-a-chip) with another circuit (such as a codec circuit, a hardware acceleration circuit, or various buses and interface circuits). Alternatively, the processor may be integrated into an ASIC as a built-in processor of the ASIC, and the ASIC integrated with the processor may be separately packaged, or may be packaged with another circuit. In addition to the core configured to execute software instructions to perform an operation or processing, the processor may further include a necessary hardware accelerator, for example, a field programmable gate array (field programmable gate array, FPGA), a PLD (a programmable logic device), or a logic circuit that implements a dedicated logic operation.

The memory in embodiments of this invention may include at least one of the following types: a read-only memory (read-only memory, ROM) or another type of static storage device that can store static information and instructions, a random access memory (random access memory, RAM) or another type of dynamic storage device that can store information and instructions, or may be an electrically erasable programmable read-only memory (Electrically erasable programmable read-only memory, EEPROM). In some scenarios, the memory may further be a compact disc read-only memory (compact disc read-only memory, CD-ROM) or another compact disc storage, an optical disc storage (including a compact disc, a laser disc, an optical disc, a digital versatile disc, a Blu-ray disc, and the like), a disk storage medium, or another magnetic storage device, or any other medium that can be used to carry or store expected program code in a form of instructions or a data structure and that can be accessed by a computer, but is not limited thereto.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, all or some of the processes or the functions according to embodiments of this invention are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD for short)), or the like.

Although this invention is described with reference to the embodiments herein, in a process of implementing this invention that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of "a plurality of". A single processor or another unit may implement several functions enumerated in the claims. Some measures are recorded in dependent claims that are different from each other, but this does not mean that these measures cannot be combined to produce a good effect.

Although this invention is described with reference to specific features and embodiments thereof, it is obvious that various modifications and combinations may be made to the specific features and the embodiments without departing from the scope of this invention. Correspondingly, the specification and accompanying drawings are merely example descriptions of this invention defined by the appended claims, and are considered as any of or all modifications, variations, combinations, or equivalents that cover the scope of this invention. It is clear that a person skilled in the art can make various modifications and variations to this invention without departing from the scope of this invention. In this way, this invention is intended to cover these modifications and variations of this invention provided that they fall within the scope of the claims of this invention.

## Claims

1.  A method for adaptively optimizing an autonomous driving system, comprising:

    obtaining a driving intent of a driver of a target vehicle (10), wherein the target vehicle (10) is an autonomous driving vehicle controlled by the autonomous driving system;
    detecting, based on the driver's driving intent, that a conflict exists between a driving behavior of the target vehicle (10) controlled by the autonomous driving system and the driver's driving intent; and
    updating the autonomous driving system, so that a driving behavior of the target vehicle (10) controlled by an updated autonomous driving system matches the driver's driving intent, wherein the updating the autonomous driving system comprises:

    obtaining a first feature parameter based on the driver's driving intent and the driving behavior of the target vehicle (10) controlled by the autonomous driving system, wherein the first feature parameter represents the driver's driving intent and driving data corresponding to the driving behavior of the target vehicle (10) controlled by the autonomous driving system;
    inputting the first feature parameter into a preset neural network model to obtain a first driving behavior, wherein the preset neural network model is used to determine a driving behavior that matches the driver's driving intent; and
    updating the autonomous driving system based on the first driving behavior.

2.  The method for adaptively optimizing an autonomous driving system according to claim 1, wherein the driving intent is represented by a feature parameter corresponding to the driver's behavior, and the driver's behavior comprises one or more of an operation behavior and an emotional behavior of the driver, wherein the emotional behavior is an emotion behavior obtained when the driver focuses on the driving behavior of the target vehicle (10) or when the driver is not performing a second task, wherein a visual behavior and a physical posture behavior of the driver are used to reflect the driver focusing on the driving behavior of the target vehicle (10), the driver's physical posture behavior is used to determine that the driver is not performing the second task.

3.  The method for adaptively optimizing an autonomous driving system according to claim 2, wherein that the conflict exists between the driving behavior of the target vehicle (10) controlled by the autonomous driving system and the driver's driving intent comprises:

    the feature parameter corresponding to the driver's behavior exceeds a preset range; and/or

a time period for which the feature parameter corresponding to the driver's behavior exceeds the preset range is greater than or equal to a first preset value; and/or

a quantity of times that the feature parameter corresponding to the driver's behavior exceeds the preset range is greater than or equal to a second preset value.

4. The method for adaptively optimizing an autonomous driving system according to any one of claim 1 to 3, wherein before the updating the autonomous driving system based on the first driving behavior, the method further comprises:

presenting one or more questions to the driver; and

receiving, from the driver, an answer to the one or more questions, wherein the answer to the one or more questions is used to indicate whether to update the autonomous driving system; and

the updating the autonomous driving system based on the first driving behavior comprises: when the answer to the one or more questions is used to indicate to update the autonomous driving system, updating the autonomous driving system based on the first driving behavior.

5. The method for adaptively optimizing an autonomous driving system according to any one of claim 1 to 3, wherein the updating the autonomous driving system based on the first driving behavior comprises:

when the first driving behavior complies with a safe driving behavior of the target vehicle (10), using the first driving behavior as a driving behavior of the target vehicle (10) controlled by the updated autonomous driving system; or

when the first driving behavior does not comply with a safe driving behavior of the target vehicle (10), using the safe driving behavior as a driving behavior of the target vehicle (10) controlled by the updated autonomous driving system.

6. An apparatus (100,101,1102) for adaptively optimizing an autonomous driving system, comprising:

a communication unit (1002), configured to obtain a driving intent of a driver of a target vehicle (10), wherein the target vehicle (10) is an autonomous driving vehicle controlled by the autonomous driving system; and

a processing unit (1001), configured to detect, based on the driver's driving intent, that a conflict exists between a driving behavior of the target vehicle (10) controlled by the autonomous driving system and the driver's driving intent; wherein

the processing unit (1001) is further configured to update the autonomous driving system, so that a driving behavior of the target vehicle (10) controlled by an updated autonomous driving system matches the driver's driving intent, wherein the updating the autonomous driving system comprises:

obtaining a first feature parameter based on the driver's driving intent and the driving behavior of the target vehicle (10) controlled by the autonomous driving system, wherein the first feature parameter represents the driver's driving intent and driving data corresponding to the driving behavior of the target vehicle (10) controlled by the autonomous driving system;

inputting the first feature parameter into a preset neural network model to obtain a first driving behavior, wherein the preset neural network model is used to determine a driving behavior that matches the driver's driving intent; and

updating the autonomous driving system based on the first driving behavior.

7. The apparatus (100,101,1102) for adaptively optimizing an autonomous driving system according to claim 6, wherein the driving intent is represented by a feature parameter corresponding to the driver's behavior, and the driver's behavior comprises one or more of an operation behavior and an emotional behavior of the driver, wherein the emotional behavior is an emotion behavior obtained when the driver focuses on the driving behavior of the target vehicle (10) or when the driver is not performing a second task, wherein a visual behavior and a physical posture behavior of the driver are used to reflect the driver focusing on the driving behavior of the target vehicle (10), the driver's physical posture behavior is used to determine that the driver is not performing the second task.

8. The apparatus (100,101,1102) for adaptively optimizing an autonomous driving system according to claim 7, wherein that the conflict exists between the driving behavior of the target vehicle (10) controlled by the autonomous driving system and the driver's driving intent comprises:

the feature parameter corresponding to the driver's behavior exceeds a preset range; and/or

a time period for which the feature parameter corresponding to the driver's behavior exceeds the preset range is greater than or equal to a first preset value; and/or
a quantity of times that the feature parameter corresponding to the driver's behavior exceeds the preset range is greater than or equal to a second preset value.

9. The apparatus (100,101,1102) for adaptively optimizing an autonomous driving system according to any one of claim 6 to 8, wherein
the communication unit (1002) is further configured to:

present one or more questions to the driver; and
receive, from the driver, an answer to the one or more questions, wherein the answer to the one or more questions is used to indicate whether to update the autonomous driving system; and
the processing unit (1001) is specifically configured to:
when the answer to the one or more questions is used to indicate to update the autonomous driving system, update the autonomous driving system based on the first driving behavior.

10. The apparatus (100,101,1102) for adaptively optimizing an autonomous driving system according to any one of claim 6 to 8, wherein the processing unit (1001) is further configured to:

when the first driving behavior complies with a safe driving behavior of the target vehicle (10), use the first driving behavior as a driving behavior of the target vehicle (10) controlled by the updated autonomous driving system; or
when the first driving behavior does not comply with a safe driving behavior of the target vehicle (10), use the safe driving behavior as a driving behavior of the target vehicle (10) controlled by the updated autonomous driving system.

11. A computer-readable storage medium, wherein the computer-readable storage medium stores computer instructions or a program, and when the computer instructions or the program are/is run on a computer, the computer is enabled to perform the method for adaptively optimizing an autonomous driving system according to any one of claims 1 to 5.

12. A computer program product including instructions, wherein when the computer program product runs on a computer, the computer is enabled to perform the method for adaptively optimizing an autonomous driving system according to any one of claims 1 to 5.

**Patentansprüche**

1. Verfahren zur adaptiven Optimierung eines autonomen Fahrsystems, umfassend:

Erlangen einer Fahrabsicht eines Fahrers eines Zielfahrzeugs (10), wobei das Zielfahrzeug (10) ein autonom fahrendes Fahrzeug ist, das durch das autonome Fahrsystem gesteuert wird;
Detektieren, basierend auf der Fahrabsicht des Fahrers, dass ein Konflikt zwischen einem Fahrverhalten des Zielfahrzeugs (10), das durch das autonome Fahrsystem gesteuert wird, und der Fahrabsicht des Fahrers besteht; und
Aktualisieren des autonomen Fahrsystems, so dass ein Fahrverhalten des Zielfahrzeugs (10), das durch ein aktualisiertes autonomes Fahrsystem gesteuert wird, mit der Fahrabsicht des Fahrers übereinstimmt, wobei das Aktualisieren des autonomen Fahrsystems Folgendes umfasst:

Erlangen eines ersten Merkmalsparameters basierend auf der Fahrabsicht des Fahrers und des Fahrverhaltens des Zielfahrzeugs (10), das durch das autonome Fahrsystem gesteuert wird, wobei der erste Merkmalsparameter die Fahrabsicht des Fahrers und Fahrdaten darstellt, die dem Fahrverhalten des Zielfahrzeugs (10), das durch das autonome Fahrsystem gesteuert wird, entsprechen;
Eingeben des ersten Merkmalsparameters in ein voreingestelltes neuronales Netzwerkmodell, um ein erstes Fahrverhalten zu erlangen, wobei das voreingestellte neuronale Netzwerkmodell dazu verwendet wird, ein Fahrverhalten, das der Fahrabsicht des Fahrers entspricht, zu bestimmen; und
Aktualisieren des autonomen Fahrsystems basierend auf dem ersten Fahrverhalten.

2. Verfahren zur adaptiven Optimierung eines autonomen Fahrsystems nach Anspruch 1, wobei die Fahrabsicht durch einen Merkmalsparameter dargestellt wird, der dem Verhalten des Fahrers entspricht, und das Verhalten des Fahrers eines oder mehrere von einem Betriebsverhalten und einem emotionalen Verhalten des Fahrers umfasst, wobei das emotionale Verhalten ein Emotionsverhalten ist, das erlangt wird, wenn sich der Fahrer auf das Fahrverhalten des Zielfahrzeugs (10) konzentriert oder wenn der Fahrer eine zweite Aufgabe nicht durchführt, wobei ein visuelles Verhalten und ein physisches Haltungsverhalten des Fahrers dazu verwendet werden, das Konzentrieren des Fahrers auf das Fahrverhalten des Zielfahrzeugs (10) zu reflektieren, wobei das physische Haltungsverhalten des Fahrers dazu verwendet wird, zu bestimmen, dass der Fahrer die zweite Aufgabe nicht durchführt.

3. Verfahren zur adaptiven Optimierung eines autonomen Fahrsystems nach Anspruch 2, wobei die Tatsache, dass der Konflikt zwischen dem Fahrverhalten des Zielfahrzeugs (10), das durch das autonome Fahrsystem gesteuert wird, und der Fahrabsicht des Fahrers besteht, Folgendes umfasst:

der Merkmalsparameter, der dem Verhalten des Fahrers entspricht, überschreitet einen voreingestellten Bereich; und/oder
eine Zeitspanne, in welcher der Merkmalsparameter, der dem Verhalten des Fahrers entspricht, den voreingestellten Bereich überschreitet, ist größer als oder gleich einem ersten voreingestellten Wert; und/oder
eine Anzahl von Malen, in denen der Merkmalsparameter, der dem Verhalten des Fahrers entspricht, den voreingestellten Bereich überschreitet, ist größer als oder gleich einem zweiten voreingestellten Wert.

4. Verfahren zur adaptiven Optimierung eines autonomen Fahrsystems nach einem der Ansprüche 1 bis 3, wobei das Verfahren vor dem Aktualisieren des autonomen Fahrsystems basierend auf dem ersten Fahrverhalten ferner Folgendes umfasst:

Darstellen einer oder mehrerer Fragen an den Fahrer; und
Empfangen, von dem Fahrer, einer Antwort auf die eine oder die mehreren Fragen, wobei die Antwort auf die eine oder die mehreren Fragen dazu verwendet wird, anzuzeigen, ob das autonome Fahrsystem zu aktualisieren ist; und
wobei das Aktualisieren des autonomen Fahrsystems basierend auf dem ersten Fahrverhalten Folgendes umfasst: wenn die Antwort auf die eine oder die mehreren Fragen dazu verwendet wird, anzuzeigen, das autonome Fahrsystem zu aktualisieren, Aktualisieren des autonomen Fahrsystems basierend auf dem ersten Fahrverhalten.

5. Verfahren zur adaptiven Optimierung eines autonomen Fahrsystems nach einem der Ansprüche 1 bis 3, wobei das Aktualisieren des autonomen Fahrsystems basierend auf dem ersten Fahrverhalten Folgendes umfasst:

wenn das erste Fahrverhalten mit einem sicheren Fahrverhalten des Zielfahrzeugs (10) in Einklang steht, Verwenden des ersten Fahrverhaltens als ein Fahrverhalten des Zielfahrzeugs (10), das durch das aktualisierte autonome Fahrsystem gesteuert wird; oder
wenn das erste Fahrverhalten nicht mit einem sicheren Fahrverhalten des Zielfahrzeugs (10) in Einklang steht, Verwenden des sicheren Fahrverhaltens als ein Fahrverhalten des Zielfahrzeugs (10), das durch das aktualisierte autonome Fahrsystem gesteuert wird.

6. Einrichtung (100, 101, 1102) zur adaptiven Optimierung eines autonomen Fahrsystems, umfassend:

eine Kommunikationseinheit (1002), die dazu konfiguriert ist, eine Fahrabsicht eines Fahrers eines Zielfahrzeugs (10) zu erlangen, wobei das Zielfahrzeug (10) ein autonom fahrendes Fahrzeug ist, das durch das autonome Fahrsystem gesteuert wird; und
eine Verarbeitungseinheit (1001), die dazu konfiguriert ist, basierend auf der Fahrabsicht des Fahrers zu detektieren, dass ein Konflikt zwischen einem Fahrverhalten des Zielfahrzeugs (10), das durch das autonome Fahrsystem gesteuert wird, und der Fahrabsicht des Fahrers besteht; wobei
die Verarbeitungseinheit (1001) ferner dazu konfiguriert ist, das autonome Fahrsystem zu aktualisieren, so dass ein Fahrverhalten des Zielfahrzeugs (10), das durch ein aktualisiertes autonomes Fahrsystem gesteuert wird, mit der Fahrabsicht des Fahrers übereinstimmt, wobei das Aktualisieren des autonomen Fahrsystems Folgendes umfasst:

Erlangen eines ersten Merkmalsparameters basierend auf der Fahrabsicht des Fahrers und des Fahrverhaltens des Zielfahrzeugs (10), das durch das autonome Fahrsystem gesteuert wird, wobei der erste Merkmalsparameter die Fahrabsicht des Fahrers und Fahrdaten darstellt, die dem Fahrverhalten des Zielfahrzeugs (10), das durch das autonome Fahrsystem gesteuert wird, entsprechen;
Eingeben des ersten Merkmalsparameters in ein voreingestelltes neuronales Netzwerkmodell, um ein erstes Fahrverhalten zu erlangen, wobei das voreingestellte neuronale Netzwerkmodell dazu verwendet wird, ein Fahrverhalten, das der Fahrabsicht des Fahrers entspricht, zu bestimmen; und

Aktualisieren des autonomen Fahrsystems basierend auf dem ersten Fahrverhalten.

7. Einrichtung (100, 101, 1102) zur adaptiven Optimierung eines autonomen Fahrsystems nach Anspruch 6, wobei die Fahrabsicht durch einen Merkmalsparameter dargestellt wird, der dem Verhalten des Fahrers entspricht, und das Verhalten des Fahrers eines oder mehrere von einem Betriebsverhalten und einem emotionalen Verhalten des Fahrers umfasst, wobei das emotionale Verhalten ein Emotionsverhalten ist, das erlangt wird, wenn sich der Fahrer auf das Fahrverhalten des Zielfahrzeugs (10) konzentriert oder wenn der Fahrer eine zweite Aufgabe nicht durchführt, wobei ein visuelles Verhalten und ein physisches Haltungsverhalten des Fahrers dazu verwendet werden, das Konzentrieren des Fahrers auf das Fahrverhalten des Zielfahrzeugs (10) zu reflektieren, wobei das physische Haltungsverhalten des Fahrers dazu verwendet wird, zu bestimmen, dass der Fahrer die zweite Aufgabe nicht durchführt.

8. Einrichtung (100, 101, 1102) zur adaptiven Optimierung eines autonomen Fahrsystems nach Anspruch 7, wobei die Tatsache, dass der Konflikt zwischen dem Fahrverhalten des Zielfahrzeugs (10), das durch das autonome Fahrsystem gesteuert wird, und der Fahrabsicht des Fahrers besteht, Folgendes umfasst:

der Merkmalsparameter, der dem Verhalten des Fahrers entspricht, überschreitet einen voreingestellten Bereich; und/oder

eine Zeitspanne, in welcher der Merkmalsparameter, der dem Verhalten des Fahrers entspricht, den voreingestellten Bereich überschreitet, ist größer als oder gleich einem ersten voreingestellten Wert; und/oder

eine Anzahl von Malen, in denen der Merkmalsparameter, der dem Verhalten des Fahrers entspricht, den voreingestellten Bereich überschreitet, ist größer als oder gleich einem zweiten voreingestellten Wert.

9. Einrichtung (100, 101, 1102) zur adaptiven Optimierung eines autonomen Fahrsystems nach einem der Ansprüche 6 bis 8, wobei

die Kommunikationseinheit (1002) ferner zu Folgendem konfiguriert ist:

Darstellen einer oder mehrerer Fragen an den Fahrer; und

Empfangen, von dem Fahrer, einer Antwort auf die eine oder die mehreren Fragen, wobei die Antwort auf die eine oder die mehreren Fragen dazu verwendet wird, anzuzeigen, ob das autonome Fahrsystem zu aktualisieren ist; und

die Verarbeitungseinheit (1001) insbesondere zu Folgendem konfiguriert ist:

wenn die Antwort auf die eine oder die mehreren Fragen dazu verwendet wird, anzuzeigen, das autonome Fahrsystem zu aktualisieren, Aktualisieren des autonomen Fahrsystems basierend auf dem ersten Fahrverhalten.

10. Einrichtung (100, 101, 1102) zur adaptiven Optimierung eines autonomen Fahrsystems nach einem der Ansprüche 6 bis 8, wobei die Verarbeitungseinheit (1001) ferner zu Folgendem konfiguriert ist:

wenn das erste Fahrverhalten mit einem sicheren Fahrverhalten des Zielfahrzeugs (10) in Einklang steht, Verwenden des ersten Fahrverhaltens als ein Fahrverhalten des Zielfahrzeugs (10), das durch das aktualisierte autonome Fahrsystem gesteuert wird; oder

wenn das erste Fahrverhalten nicht mit einem sicheren Fahrverhalten des Zielfahrzeugs (10) in Einklang steht, Verwenden des sicheren Fahrverhaltens als ein Fahrverhalten des Zielfahrzeugs (10), das durch das aktualisierte autonome Fahrsystem gesteuert wird.

11. Computerlesbares Speichermedium, wobei das computerlesbare Speichermedium Computeranweisungen oder ein Programm speichert und, wenn die Computeranweisungen oder das Programm auf einem Computer ausgeführt werden/wird, der Computer in die Lage versetzt wird, das Verfahren zur adaptiven Optimierung eines autonomen Fahrsystems nach einem der Ansprüche 1 bis 5 durchzuführen.

12. Computerprogrammprodukt, das Anweisungen beinhaltet, wobei, wenn das Computerprogrammprodukt auf einem Computer ausgeführt wird, der Computer in die Lage versetzt wird, das Verfahren zur adaptiven Optimierung eines autonomen Fahrsystems nach einem der Ansprüche 1 bis 5 durchzuführen.

**Revendications**

1. Procédé d'optimisation adaptative d'un système de conduite autonome, comprenant :

l'obtention d'une intention de conduite d'un conducteur d'un véhicule cible (10), dans lequel le véhicule cible (10) est un véhicule à conduite autonome commandé par le système de conduite autonome ;
la détection, sur la base de l'intention de conduite du conducteur, du fait qu'un conflit existe entre un comportement de conduite du véhicule cible (10) commandé par le système de conduite autonome et l'intention de conduite du conducteur ; et
la mise à jour du système de conduite autonome, de sorte qu'un comportement de conduite du véhicule cible (10) commandé par un système de conduite autonome mis à jour correspond à l'intention de conduite du conducteur, dans lequel la mise à jour du système de conduite autonome comprend :

l'obtention d'un premier paramètre de caractéristique sur la base de l'intention de conduite du conducteur et du comportement de conduite du véhicule cible (10) commandé par le système de conduite autonome, dans lequel le premier paramètre de caractéristique représente l'intention de conduite du conducteur et les données de conduite correspondant au comportement de conduite du véhicule cible (10) commandé par le système de conduite autonome ;
l'entrée du premier paramètre de caractéristique dans un modèle de réseau neuronal prédéfini pour obtenir un premier comportement de conduite, dans lequel le modèle de réseau neuronal prédéfini est utilisé pour déterminer un comportement de conduite qui correspond à l'intention de conduite du conducteur ; et
la mise à jour du système de conduite autonome sur la base du premier comportement de conduite.

2. Procédé d'optimisation adaptative d'un système de conduite autonome selon la revendication 1, dans lequel l'intention de conduite est représentée par un paramètre de caractéristique correspondant au comportement du conducteur, et le comportement du conducteur comprend un ou plusieurs d'un comportement de fonctionnement et d'un comportement émotionnel du conducteur, dans lequel le comportement émotionnel est un comportement émotionnel obtenu lorsque le conducteur se concentre sur le comportement de conduite du véhicule cible (10) ou lorsque le conducteur ne réalise pas une seconde tâche, dans lequel un comportement visuel et un comportement de posture physique du conducteur sont utilisés pour refléter le conducteur se concentrant sur le comportement de conduite du véhicule cible (10), le comportement de posture physique du conducteur est utilisé pour déterminer que le conducteur n'exécute pas la seconde tâche.

3. Procédé d'optimisation adaptative d'un système de conduite autonome selon la revendication 2, dans lequel le fait que le conflit existe entre le comportement de conduite du véhicule cible (10) commandé par le système de conduite autonome et l'intention de conduite du conducteur comprend :

le paramètre de caractéristique correspondant au comportement du conducteur qui dépasse une plage prédéfinie ; et/ou
une période de temps pendant laquelle le paramètre de caractéristique correspondant au comportement du conducteur qui dépasse la plage prédéfinie est supérieure ou égale à une première valeur prédéfinie ; et/ou
une quantité de fois où le paramètre de caractéristique correspondant au comportement du conducteur qui dépasse la plage prédéfinie est supérieure ou égale à une seconde valeur prédéfinie.

4. Procédé d'optimisation adaptative d'un système de conduite autonome selon l'une quelconque revendication 1 à 3, dans lequel, avant la mise à jour du système de conduite autonome sur la base du premier comportement de conduite, le procédé comprend également :

le fait de poser une ou plusieurs questions au conducteur ; et
la réception, en provenance du conducteur, d'une réponse aux une ou plusieurs questions, dans lequel la réponse aux une ou plusieurs questions est utilisée pour indiquer s'il faut mettre à jour le système de conduite autonome ; et
la mise à jour du système de conduite autonome sur la base du premier comportement de conduite comprend :
lorsque la réponse aux une ou plusieurs questions est utilisée pour indiquer de mettre à jour le système de conduite autonome, la mise à jour du système de conduite autonome sur la base du premier comportement de conduite.

5. Procédé d'optimisation adaptative d'un système de conduite autonome selon l'une quelconque revendication 1 à 3, dans lequel la mise à jour du système de conduite autonome sur la base du premier comportement de conduite comprend :

lorsque le premier comportement de conduite est conforme à un comportement de conduite sûr du véhicule cible (10), l'utilisation du premier comportement de conduite en tant que comportement de conduite du véhicule cible (10) commandé par le système de conduite autonome mis à jour ; ou
lorsque le premier comportement de conduite n'est pas conforme à un comportement de conduite sûr du véhicule cible (10), l'utilisation du comportement de conduite sûr en tant que comportement de conduite du véhicule cible (10) commandé par le système de conduite autonome.

6. Appareil (100, 101, 1102) pour l'optimisation adaptative d'un système de conduite autonome, comprenant :

une unité de communication (1002), configurée pour obtenir une intention de conduite d'un conducteur d'un véhicule cible (10), dans lequel le véhicule cible (10) est un véhicule à conduite autonome commandé par le système de conduite autonome ; et
une unité de traitement (1001), configurée pour détecter, sur la base de l'intention de conduite du conducteur, qu'un conflit existe entre un comportement de conduite du véhicule cible (10) commandé par le système de conduite autonome et l'intention de conduite du conducteur ; dans lequel
l'unité de traitement (1001) est également configurée pour mettre à jour le système de conduite autonome, de sorte qu'un comportement de conduite du véhicule cible (10) commandé par un système de conduite autonome mis à jour correspond à l'intention de conduite du conducteur, dans lequel la mise à jour du système de conduite autonome comprend :

l'obtention d'un premier paramètre de caractéristique sur la base de l'intention de conduite du conducteur et du comportement de conduite du véhicule cible (10) commandé par le système de conduite autonome, dans lequel le premier paramètre de caractéristique représente l'intention de conduite du conducteur et les données de conduite correspondant au comportement de conduite du véhicule cible (10) commandé par le système de conduite autonome ;
l'entrée du premier paramètre de caractéristique dans un modèle de réseau neuronal prédéfini pour obtenir un premier comportement de conduite, dans lequel le modèle de réseau neuronal prédéfini est utilisé pour déterminer un comportement de conduite qui correspond à l'intention de conduite du conducteur ; et
la mise à jour du système de conduite autonome sur la base du premier comportement de conduite.

7. Appareil (100, 101, 1102) d'optimisation adaptative d'un système de conduite autonome selon la revendication 6, dans lequel l'intention de conduite est représentée par un paramètre de caractéristique correspondant au comportement du conducteur, et le comportement du conducteur comprend un ou plusieurs d'un comportement de fonctionnement et d'un comportement émotionnel du conducteur, dans lequel le comportement émotionnel est un comportement émotionnel obtenu lorsque le conducteur se concentre sur le comportement de conduite du véhicule cible (10) ou lorsque le conducteur ne réalise pas une seconde tâche, dans lequel un comportement visuel et un comportement de posture physique du conducteur sont utilisés pour refléter le conducteur se concentrant sur le comportement de conduite du véhicule cible (10), le comportement de posture physique du conducteur est utilisé pour déterminer que le conducteur ne réalise pas la seconde tâche.

8. Appareil (100, 101, 1102) d'optimisation adaptative d'un système de conduite autonome selon la revendication 7, dans lequel le fait que le conflit existe entre le comportement de conduite du véhicule cible (10) commandé par le système de conduite autonome et l'intention de conduite du conducteur comprend :

le paramètre de caractéristique correspondant au comportement du conducteur qui dépasse une plage prédéfinie ; et/ou
une période de temps pendant laquelle le paramètre de caractéristique correspondant au comportement du conducteur qui dépasse la plage prédéfinie est supérieure ou égale à une première valeur prédéfinie ; et/ou
une quantité de fois où le paramètre de caractéristique correspondant au comportement du conducteur qui dépasse la plage prédéfinie est supérieure ou égale à une seconde valeur prédéfinie.

9. Appareil (100, 101, 1102) d'optimisation adaptative d'un système de conduite autonome selon l'une quelconque revendication 6 à 8, dans lequel
l'unité de communication (1002) est également configurée pour :

poser une ou plusieurs questions au conducteur ; et

recevoir, en provenance du conducteur, une réponse aux une ou plusieurs questions, dans lequel la réponse aux une ou plusieurs questions est utilisée pour indiquer s'il faut mettre à jour le système de conduite autonome ; et l'unité de traitement (1001) est spécifiquement configurée pour :

lorsque la réponse aux une ou plusieurs questions est utilisée pour indiquer de mettre à jour le système de conduite autonome, mettre à jour le système de conduite autonome sur la base du premier comportement de conduite.

10. Appareil (100, 101, 1102) d'optimisation adaptative d'un système de conduite autonome selon l'une quelconque revendication 6 à 8, dans lequel l'unité de traitement (1001) est également configurée pour :

lorsque le premier comportement de conduite est conforme à un comportement de conduite sûr du véhicule cible (10), utiliser le premier comportement de conduite en tant que comportement de conduite du véhicule cible (10) commandé par le système de conduite autonome mis à jour ; ou

lorsque le premier comportement de conduite n'est pas conforme à un comportement de conduite sûr du véhicule cible (10), utiliser le comportement de conduite sûr en tant que comportement de conduite du véhicule cible (10) commandé par le système de conduite autonome.

11. Support de stockage lisible par ordinateur, dans lequel le support de stockage lisible par ordinateur stocke des instructions informatiques ou un programme, et lorsque les instructions informatiques ou le programme sont exécutés sur un ordinateur, l'ordinateur est activé pour réaliser le procédé d'optimisation adaptative d'un système de conduite autonome selon l'une quelconque des revendications 1 à 5.

12. Produit de programme informatique comportant des instructions, dans lequel lorsque le produit de programme informatique est exécuté sur un ordinateur, l'ordinateur est activé pour réaliser le procédé d'optimisation adaptative d'un système de conduite autonome selon l'une quelconque des revendications 1 à 5.

V2X server 20

Vehicle 10

FIG. 1

Vehicle body
antenna 103

RF cable

Autonomous
driving apparatus
101

RF cable

Another
component

Vehicle body
gateway 102

Vehicle 10

FIG. 2

FIG. 3

FIG. 4

Start

An autonomous driving apparatus obtains a driving intent of a driver of a target vehicle

Step 501

The autonomous driving apparatus detects, based on the driver's driving intent, that a conflict exists between a driving behavior of the vehicle controlled by an autonomous driving system and the driver's driving intent

Step 502

The autonomous driving apparatus updates the autonomous driving system, so that a driving behavior of the target vehicle controlled by an updated autonomous driving system matches the driver's driving intent

Step 503

Stop

FIG. 5

FIG. 6a

FIG. 6b

Steering wheel

FIG. 6c

Voice collection
apparatus 2

Voice collection
apparatus 1

FIG. 7

FIG. 8

Start

Step 901

An autonomous driving apparatus detects whether a driver of a target vehicle is a new driver

Yes

Step 902

The autonomous driving apparatus determines an autonomous driving mode of the target vehicle based on the driver's feature information

Step 903

The autonomous driving apparatus obtains a feature parameter corresponding to the driver's behavior in a first driving scenario

Step 904

The autonomous driving apparatus determines the driver's driving intent based on the feature parameter corresponding to the driver's behavior

Step 905

The autonomous driving apparatus determines a first feature parameter based on the driver's driving intent and a driving behavior of the vehicle controlled by the autonomous driving system

Step 906

The autonomous driving apparatus inputs the first feature parameter into a preset neural network model, to obtain a first driving behavior

Step 907

The autonomous driving apparatus updates the autonomous driving system based on the first driving behavior

End

FIG. 9

Processing unit 1001

Storage unit 1003

Communication unit 1002

Autonomous driving apparatus 100

FIG. 10

V2X server 1101

Autonomous driving
apparatus 1102

FIG. 11

**EP 4 137 897 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016347328 A
- DE 102016224291 A

- US 2019135274 A